# EUROPEAN PATENT APPLICATION

(11) **EP 2 378 481 A1**
(43) Date of publication of application: **19.10.2011**
(21) Application number: 09831820.7
(22) Date of filing: 26.11.2009
(51) Int. Cl.: G06Q 50/00, G06K 17/00, G06Q 10/00

(54) **EMISSION ALLOWANCE TRADING SYSTEM AND EMISSION ALLOWANCE TRADING METHOD**

(30) Priority: 11.12.2008 JP 2008315683
(71) Applicant: Inter-University Research Institute Corporation Research Organization of Information and Systems, Tokyo 191-0014 (JP)
(72) Inventor: SATOH Ichiro, Tokyo 101-8430 (JP)
(74) Representative: Betten & Resch
(86) International application number: PCT/JP2009/069976
(87) International publication number: WO 2010/067716

(57) **Abstract**

In order to disclose an emission allowance for each product and allow its trading on a product unit basis, the present invention manages, in a management server 9 requesting execution of a settlement process to settlement servers 5a and 5b which make settlement of the emission allowance, weight information of the emission allowance and identification information of a non-contact IC medium 6 in association with each other and stores, in databases provided in the settlement servers 5a and 5b, weight information of an emission allowance on a seller's side, seller's account information, weight information of an emission allowance on a buyer's side, and buyer's account information. When the non-contact IC medium 6 removed from a product 10 bought from the seller's side is sent from the buyer's side, a withdrawal process from the seller's account and a transfer process to the buyer's account are performed in the settlement servers 5a and 5b in relation with the emission allowance traded between the seller's side and the buyer's side, based on the transmitted execution request of the settlement process and the information stored in the databases.

## Description

### Technical Field

The present invention relates to an emission allowance trading system and an emission allowance trading method which allow a surplus emission amount arising from a surplus of a preliminarily allocated greenhouse gas emission allowance to be used in a manner similar to marketable securities and enable it to be efficiently tradable.

### Background Art

In recent years, deterioration of environment caused by greenhouse gas such as carbon dioxide (CO2) has become a serious social and international problem as climate changes. As a measure for preventing climate changes, an international agreement (the Kyoto Protocol to the United Nations Framework Convention on Climate Change: a protocol resolved at the Kyoto Conference on the Prevention of Global Warming held on December 11, 1997) about numerical target of greenhouse gas reduction, emission allowance (or credit) trading, clean development mechanism, or the like has been reached, and each country is now working to realize it.

In particular, emission allowance trading is buying and selling, between nations and between companies, surplus emission allowances generated through efforts to reduce greenhouse gas, and is expected to provide an economic incentive for reducing emission of greenhouse gas. However, there are also many problems in current emission allowance trading. One of the problems is that it is difficult for small businesses, NPOs (Nonprofit Organization), and individuals to buy an emission allowance. This is because current emission allowance trading is assumed to take place between nations or between big companiesm, and its unit of trading is relatively large and the procedure of buying and selling is relatively complicated. In other words, there has been no means for small businesses, NPOs, and individuals to offset (carbon offset) the greenhouse gas they have emitted, even if they desire to do so.

As an approach to solve the above-described problems, a technique is known which treats an emission allowance as a trust estate and divides the trust estate into small amounts each as a beneficial interest in trust investment. According to the technique, specifically, a company keeping an emission allowance trusts the emission allowance to a trust bank, which in turn issues a small-amount trust beneficial interest corroborated thereby. A business operator or an individual can have a position as a substantial owner of the emission allowance by taking over the trust beneficial interest thus issued from the trust bank. For example, Patent Literature 1 describes a system for providing a market, which translates the reduced amount of CO2 emission achieved by fuel conversion into a bond as an emission allowance.

On the other hand, although emission allowance trading provides economical value to the emission allowance resulting from reduced emission, there is a problem that emission allowance trading itself cannot reduce emission of greenhouse gas. Since greenhouse gas is generated through all kinds of economic and social activities, such as production and distribution of commercial products and services, buyers of commercial products and services are expected to actively choose products and services that emit smaller amounts of greenhouse gas.

The act of actively choosing and buying commercial products and services that emit smaller amounts of greenhouse gas is referred to as "Green Purchasing", with the "Law on Promoting Green Purchasing" having been established in 2000 to promote Green Puchasing. A variety of approaches to promote Green Puchasing have been devised, and Patent Literature 2, for example, describes a method of aggregating and grasping the amount of reduced carbon dioxide associated with Green Purchasing.

In addition, an effort referred to as "Carbon Footprint" is also known, which facilitates the effort for reducing greenhouse gas by indicating the amount and source of CO2 emission of a commercial product.

Patent Literature 1: Japanese Unexamined Patent Aplication Publication No. 2004-310469
Patent Literature 2: Japanese Unexamined Patent Application Publication No. 2007-249406

However, carbon footprint only indicates the amount and source of carbon emission of commercial products, having no economic incentive for buyers. Therefore, it is an approach relying on the buyer's goodwill, and is questionable with regard to its effectiveness. On the other hand, an emission allowance results from reduction of emission and can provide economic incentive as well. In other words, selling emission allowances in association with commercial products and services, for example, and letting buyers buy those products and services may result in a carbon offset due to the act of selling. In addition, if buyers actively choose such products and services with emission allowances, reduction of emission can be promoted as a result.

Accordingly, there are many commercial products in the market that place emphasis on providing emission allowances. Such products providing emission allowances are sold to manufacturers or selling agents by owners of the emission allowances. In other words, the manufacturers or selling agents emit CO2 when using or disposing the products with emission allowances in place of the owner of the emission allowances. There has been a problem with this trading that, even if a consumer buys a commercial product with an emission allowance, the ownership of the emission allowance is not transferred to the consumer because the emission allowance is owned by the manufacturer or selling agent, or transferred to the government free of charge.

In view of the above-described problems, it is an object of the present invention to allow the emission allowance to be disclosed for each product and allow it to be traded with the product.

### Disclosure of the Invention

In the present invention, a non-contact IC medium is used. The non-contact IC medium used in the present invention refers to an RFID (Radio Frequency IDentification) tag, an IC card (often called a smart card), and/or any information storage medium having equivalent functions. A medium provided with a forgery-preventing barcode using holography or the like can be used as the non-contact IC medium in the present invention, and will be included in the above-mentioned "information storage medium having equivalent functions" in the present invention. In the emission allowance trading system of the present invention, a terminal device on the side of a seller who sells a product and/or an emission allowance, a terminal device on the side of a buyer who buys the product and/or the emission allowance, a settlement server which performs a settlement process of the emission allowance, and a management server which requests the settlement server to perform the settlement process are connected via a network.
The management server used in the emission allowance trading system of the present invention includes a first reading and writing device which reads and writes data from and to the non-contact IC medium, a first database which manages weight information of emission allowance and identification information of the non-contact IC medium in association with each other, a first communication processing unit which transmits and receives data via the network, and a first control unit which controls the first database and the first communication processing unit. In addition, the terminal device on the buyer's side includes a second reading and writing device which reads and writes data from and to the non-contact IC medium (RFID tag), a second communication processing unit which transmits and receives data via the network, and a second control unit which controls the first reading and writing device and the second communication processing unit.
In addition, the settlement server used in the emission allowance trading system of the present invention includes a second database which manages weight information of the emission allowance on the seller's side, account information of a dealing account of the emission allowance of the seller, weight information of the emission allowance on the buyer's side, and account information of a dealing account of the emission allowance of the buyer, and a third control unit which controls the second database and also controls a withdrawal process from the account of the seller and a transfer process to the account of the buyer.
When the non-contact IC medium removed from a product bought from the seller's side is sent from the buyer's side, the first reading and writing device is caused to read the non-contact IC medium, and the weight of the emission allowance in the first database associated with the identification information read by the first reading and writing device is subtracted, and subtracted weight information which is the information of the subtracted weight and identification information of the non-contact IC medium are transmitted to the settlement server as a request of executing the settlement process. When the request of executing the settlement process is received from the management server, the weight corresponding to the amount described in the subtracted weight information transmitted from the management server is subtracted from the weight of the emission allowance of the seller in the second database associated with the identification information included in the execution request, and the subtracted weight is added to the weight of the emission allowance of the buyer in the second database, and further, an amount of the subtracted weight is withdrawn from the account of the seller and the withdrawn amount is transferred to the account of the buyer.

In addition, the emission allowance trading method of the present invention is a method of trading an emission allowance of greenhouse gas between a seller who sells a product and/or an emission allowance and a buyer who buys the product and/or the emission allowance, and the method comprises, in a process of a management server requesting execution of a settlement process to a settlement server which makes a settlement of an emission allowance, steps of: managing weight information of the emission allowance and identification information of a non-contact IC medium in association with each other; and storing, in a database provided at the settlement server, weight information of an emission allowance on the seller's side, account information of a dealing account of the emission allowance of the seller, weight information of an emission allowance on the buyer's side, and account information of a dealing account of the emission allowance of the buyer.
In addition, the method further comprises steps of: when the non-contact IC medium removed from a product bought from the seller's side is sent from the buyer's side, reading the identification information described on the non-contact IC medium, subtracting the weight of the emission allowance in the database associated with the read identification information, and transmitting subtracted weight information which is the information of the subtracted weight and identification information of the non-contact IC medium to the settlement server as a request of executing the settlement process; and in the settlement servers, withdrawing from the account of the seller and transferring to the account of the buyer in relation with the emission allowance traded between the seller' s side and the buyer's side, based on the transmitted request of executing the settlement process and the information stored in the database.

According to the present invention, since information which refers to information related to the emission allowance is recorded on the non-contact IC medium itself attached to the product and thereby the emission allowance is securitized (as an entity to be traded), it becomes possible to trade the emission allowance easily and soundly.

### Brief Description of the Drawings

FIG. 1 is a conceptual drawing for explaining the concept of an emission allowance dealt by the present invention;
FIG. 2 is an explanatory drawing illustrating the outline of a system in an embodiment of the present invention;
FIG. 3 is another explanatory drawing illustrating the outline of the system in the embodiment of the present invention;
FIG. 4 an explanatory drawing illustrating an exemplary configuration of the system in the embodiment of the present invention;
FIGS. 5A and 5B are explanatory drawings illustrating an exemplary process performed by an emission allowance account management business operator in the embodiment of the present invention, where FIG. 5A shows an exemplary reserve process and FIG. 5B shows an exemplary transfer process;
FIG. 6 is a block diagram illustrating an exemplary internal configuration of a system at a product sales business operator in the embodiment of the present invention;
FIG. 7 is a block diagram illustrating an exemplary internal configuration of a system at an electronic tag purchasing business operator in the embodiment of the present invention;
FIG. 8 is a block diagram illustrating an exemplary internal configuration of a system at an electronic tag information management business operator in the embodiment of the present invention;
FIG. 9 is a block diagram illustrating an exemplary internal configuration of a system at an emission allowance account management business operator in the embodiment of the present invention;
FIG. 10 illustrates an exemplary data structure of an electronic tag used in the present invention;
FIG. 11 illustrates an exemplary table configuration of a database of a product sales business operator;
FIG. 12 illustrates an exemplary table configuration of a database of an emission allowance account management business operator;
FIG. 13 illustrates an exemplary table configuration of a database of an electronic tag information management business operator;
FIG. 14 is a system configuration diagram explaining an exemplary process of a sales phase in the embodiment of the present invention;
FIG. 15 is a sequence diagram illustrating an exemplary process of the sales phase in the embodiment of the present invention;
FIG. 16 is a flowchart illustrating a process of a product sales business operator's terminal in the sales phase in the embodiment of the present invention;
FIGS. 17A and 17B illustrate a table configuration of a database in a product sales business operator in the embodiment of the present invention;
FIG. 18 is a flowchart illustrating a process of an electronic tag information management business operator in the embodiment of the present invention;
FIGS. 19A to 19C illustrate a change of a table corresponding to a process of a database of an electronic tag information management business operator in the embodiment of the present invention;
FIG. 20 illustrates an exemplary registration of a surplus emission amount in the embodiment of the present invention;
FIG. 21 is a flowchart explaining a process of an emission allowance account management business operator in the embodiment of the present invention;
FIGS. 22A and 22B illustrate a change of the table, as a result of the database processing of the emission allowance account management business operator in the embodiment of the present invention;
FIGS. 23A to 23D are flowcharts and sequence diagrams illustrating exemplary processs in a transfer phase in the embodiment of the present invention;
FIG. 24 is a system schematic diagram illustrating an exemplary process in a surplus emission reference phase in the embodiment of the present invention;
FIG. 25 is a sequence diagram illustrating an exemplary process in the surplus emission reference phase in the embodiment of the present invention;
FIG. 26 illustrates an exemplary database in an electronic tag information management business operator in the embodiment of the present invention;
FIG. 27 is a system schematic diagram illustrating an exemplary process of a return phase in the embodiment of the present invention;
FIG. 28 is a sequence diagram illustrating an exemplary process of the return phase in the embodiment of the present invention;
FIG. 29 is a sequence diagram illustrating an exemplary process of the return phase when a read-only electronic tag is used in the embodiment of the present invention;
FIG. 30 is a system schematic diagram illustrating an exemplary process of a settlement phase in the embodiment of the present invention;
FIG. 31 is a sequence diagram illustrating an exemplary process of the settlement phase in the embodiment of the present invention;
FIG. 32 is a flowchart illustrating an exemplary process of an electronic tag information management business operator in the settlement phase in the embodiment of the present invention;
FIGS. 33A to 33C illustrate an exemplary change in a database of an electronic tag information management business operator in the settlement phase in the embodiment of the present invention;
FIG. 34 is a flowchart illustrating an exemplary process of an emission allowance account management business operator in the settlement phase in the embodiment of the present invention;
FIGS. 35A to 35C illustrate an exemplary change in a database of an emission allowance account management business operator in a withdrawal process in the embodiment of the present invention;
FIGS. 36A to 36C illustrate an exemplary change in a database of an emission allowance account management business operator in a transfer process in the embodiment of the present invention;
FIG. 37 illustrates an exemplary data structure of an electronic tag according to an exemplary variation of the present invention;
FIG. 38 is a sequence diagram illustrating a method of specifying an electronic tag information management business operator according to an exemplary variation of the present invention; and
FIG. 39 illustrates an exemplary table structure of a database in an electronic tag information management business operator according to an exemplary variation of the present invention.

### Description of Preferred Embodiments

An embodiment of a method and a management system of trading CO2 emission according to the present invention will be described below in sequence according to the following articles, referring to the accompanying drawings.
1. Concept of the emission allowance
2. Exemplary overall configuration of the system
3. Exemplary internal configuration of the system
4. Data structure inside an electronic tag
5. Exemplary construction of each database composing the system
6. Exemplary operation of the system
7. Effects by the embodiment
8. Exemplary variation (1) of the embodiment: an example when the owner of electronic tags is an electronic tag information management business operator
9. Exemplary variation (2) of the embodiment: an example when applied to a reuse/recycling system

### [1. Concept of the emission allowance]

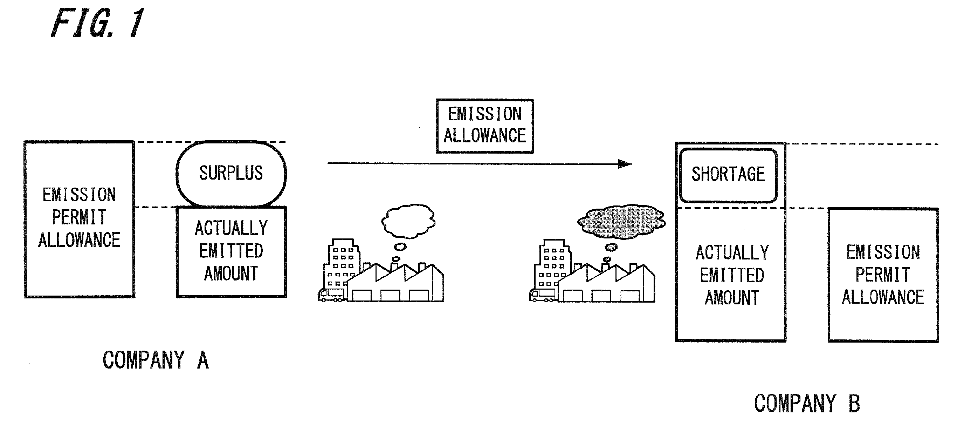

FIG. 1 is a conceptual drawing illustrating that an emission allowance of greenhouse gas such as CO2 is securitized and traded, as a premise for explaining an embodiment of the present invention (referred to as "the present embodiment" below). It is shown that there are companies A and B, each having a permissible emission defined therefor. For company A on the left side, it is shown that the amount it actually emitted (referred to as an actually emitted amount, in the following) is less than the permissible emission allocated thereto. In other words, company A has a surplus amount of emission (referred to as "surplus emission amount" in the following) as a result of subtracting the actually emitted amount from the permissible emission.

On the other hand, company B shown in FIG. 1 has the actually emitted amount of greenhouse gas exceeding the permissible emission. Accordingly, there is a shortage of the permissible emission for company B. In such a case, company B can increase its permissible emission by procuring an amount filling the shortage from others. In the example shown in FIG. 1, a trade is feasible such that company A sells its surplus emission amount as an emission allowance and company B buys the emission allowance. In the following discussion, the emission allowance before settlement is referred to as "surplus emission amount", whereas the emission allowance after settlement is referred to as "emission allowance".

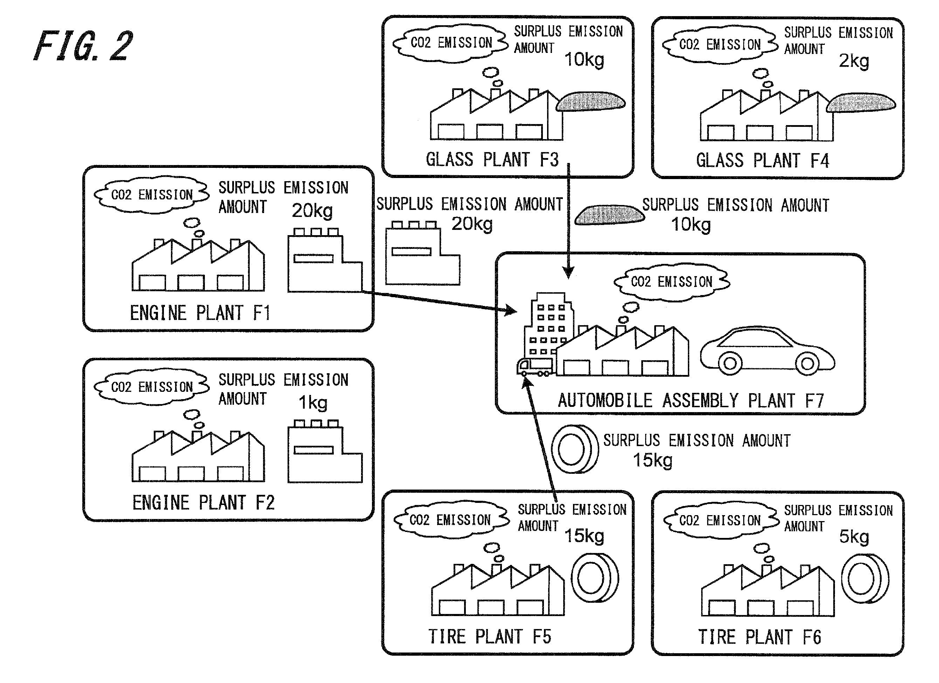

The system according to the present embodiment makes surplus emission amounts tradable by attaching them to a variety of products manufactured in plants or the like. FIG. 2 is an explanatory drawing which illustrates how the system of the present embodiment reduces greenhouse gas (CO2 in the example of FIG. 2) in companies. FIG. 2 illustrates a variety of plants involved in each stage of the manufacturing process of automobiles, and specifically illustrates engine plants F1 and F2, glass plants F3 and F4, tire plants F5 and F6, and an automobile assembly plant F7.

It is shown that the engine plants F1 and F2 have different surplus emission amounts attached to their products (engines), although they are both plants that manufacture engines. While the engine plant F1 has a surplus emission amount of 20kg attached to each product, the engine plant F2 has a surplus emission amount of only 1kg attached to each product. Here, a plant having a larger surplus emission amount attached to each product is either a plant, which has increased its surplus emission allowance through its own efforts for emission reduction, or a plant which has bought many emission allowances from other companies.

From the viewpoint of a buyer of products, since the surplus emission amount can be paid back in cash later, the buyer is likely to positively choose, among equivalent products, a product having a larger surplus emission amount attached thereto. In other words, a product having a larger surplus emission amount attached thereto is likely to become more sellable. Accordingly, each plant will sell more sellable products, i.e., products having larger emission allowances attached thereto, which results in promotion of reduction of emission allowances in the entire market.

### [2. Exemplary overall configuration of the system]

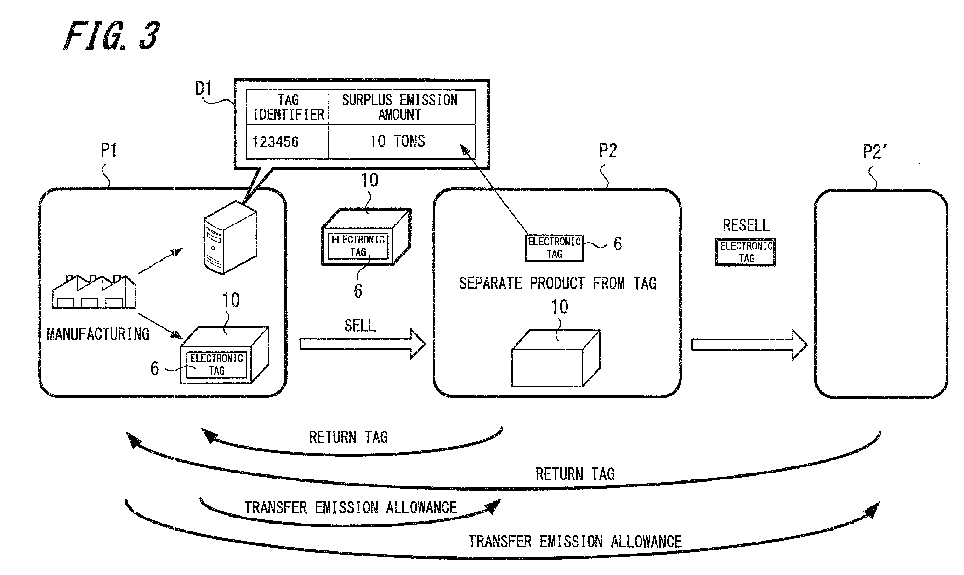

FIG. 3 is an explanatory drawing illustrating the outline of the system according to the present embodiment of the present invention, although details of the devices composing the system will be described later.

A product sales business operator P1 who manufactures and sells a product 10 also sells, together with the product 10, a surplus emission amount as a right. The surplus emission amount is sold in a manner using a non-contact IC medium. In the following, a non-contact IC medium will be described with an RFID tag 6 (referred to as an "electronic tag 6" in the following) taken as an example. Specifically, the product sales business operator P1 prepares the electronic tag 6 on which an identifier associated with management data of the surplus emission amount has been described, and attaches the electronic tag 6 to the product 10 for sale. In this embodiment, the product sales business operator P1 is the manufacturer and seller of the product 10 and also the owner of the electronic tag 6.

It is assumed that the surplus emission amount allocated to each product 10 can be set in an arbitrary manner. In other words, the surplus emission amount can be used as a kind of cashback. Data of the surplus emission amount is recorded in a database D1. Information recorded in the database D1 can be read from the electronic tag 6 attached to the product 10.

A product buyer P2 buys the product 10 with the electronic tag 6 attached thereto sold by the product sales business operator P1. The product buyer P2 can refer to the information of the bought surplus emission amount by reading the electronic tag 6 attached to the product 10 using an electronic tag reader and writer (not shown). The product 10 and the electronic tag 6 are separably provided so that the product 10 can be used for its original purpose by removing the electronic tag 6 from the product 10. In addition, the electronic tag 6 thus removed in this case can be used as marketable securities. In other words, the electronic tag 6 can be used as marketable securities for making a settlement of the "surplus emission amount" as an "emission allowance".

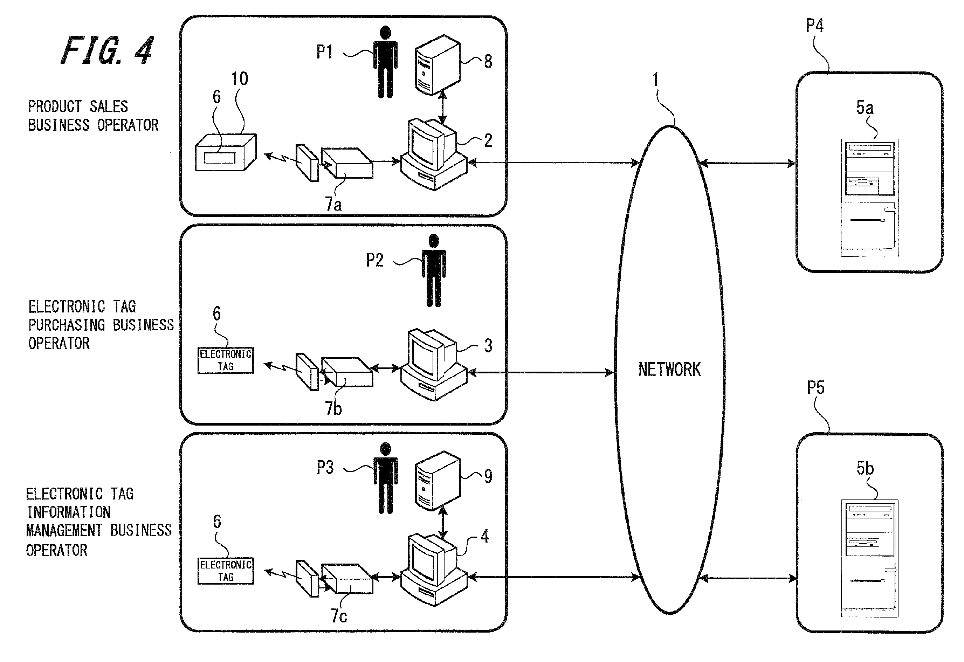

In order to make a settlement of an emission allowance, the product buyer P2 only has to return the electronic tag 6 to the product sales business operator P1. The product sales business operator P1 who received the returned electronic tag 6 makes payment for the returned electronic tag 6 into the account of the product buyer P2 in exchange of receiving the electronic tag 6. In other words, according to the system of the present embodiment, returning the electronic tag 6 enables settlement of the emission allowance. In the present embodiment, the settlement process of the surplus emission amount is performed by another business operator referred to as an "electronic tag information management business operator", that is different from the product sales business operator P1. The system configuration including the electronic tag information management business operator will be described, referring to the subsequent FIG. 4.

In addition, the product buyer P2 can also resell the product 10 having the electronic tag 6 attached thereto, or the electronic tag 6 itself which has been removed from the product 10 to another product buyer (tag buyer P2'). Then, returning the electronic tag 6 from the tag buyer P2' to the product sales business operator P1 causes the emission allowance as a right to be transferred to the tag buyer P2' . Although the electronic tag 6 having the surplus emission amount described thereon is attached to the product 10 in the present embodiment, an information storage medium such as an IC card or a medium using a forgery-preventing barcode may be used instead of the electronic tag 6.

Next, an exemplary configuration of a system including also the "electronic tag information management business operator" will be described, referring to FIG. 4. In FIG. 4, identical reference numerals are provided to elements corresponding to those of FIG. 3. In the present example, a terminal device 2 of the product sales business operator P1, a terminal device 3 of the electronic tag purchasing business operator P2, and a terminal device 4 of an electronic tag information management business operator P3 are connected to each other via a network 1.

The product sales business operator P1 shown in FIG. 4 is identical to the product sales business operator P1 shown in FIG. 3 and sells an emission allowance (surplus emission amount) by attaching it to the product 10. To the terminal device 2 of the product sales business operator P1, an electronic tag reader and writer 7a which reads the electronic tag 6 attached to each product 10 is connected. In the present example, the electronic tag 6 is configured to be capable of writing as well as reading. Data structure in the electronic tag 6 will be described later. In addition, the terminal device 2 is also connected to a database server (simply referred to as "DB server" in the following) 8. The DB server 8 manages information related to operation of the electronic tag 6. An exemplary construction of the DB server 8 will also be described below.

The electronic tag purchasing business operator P2 of FIG. 4 corresponds to the person (or business operator) as the product buyer P2 in FIG. 3 and buys the product 10 having the electronic tag 6 attached thereto from the product sales business operator P1. The electronic tag purchasing business operator P2 has a right to transfer the surplus emission amount allocated to the electronic tag 6 to his/her own account (emission allowance account on the buyer's side) upon buying the product 10 with the electronic tag 6. The electronic tag purchasing business operators P2 include not only a business operator that buys the product 10 having the electronic tag 6 attached thereto but also a business operator that buys only the electronic tag 6 without the product 10. Accordingly, the business operator here is referred to as the "electronic tag purchasing business operator P2" instead of the "product purchasing business operator".

To the terminal device 3 of the electronic tag purchasing business operator P2, an electronic tag reader and writer 7b (second reading and writing device) which can read and write the electronic tag 6 is connected. When a read-only electronic tag 6 is employed as the electronic tag 6, a read-only electronic tag reader is used. As another method for only reading the electronic tag 6, a barcode, for example, may be applied to the electronic tag 6. In this case, a read-only barcode scanner may be used instead of the electronic tag reader and writer. In addition, forgery-preventing technology such as holography can be applied to prevent reproduction of the barcode.

The electronic tag information management business operator P3 makes a settlement of the surplus emission amount on behalf of the product sales business operator P1. In other words, the electronic tag information management business operator P3 performs the process of accepting the electronic tag 6 returned from the electronic tag purchasing business operator P2, and transferring the surplus emission amount attached to the electronic tag 6 to an account of the electronic tag purchasing business operator P2. There may be a plurality of the electronic tag information management business operators P3. In other words, the product sales business operator P1 may delegate representative tasks of making a settlement of the surplus emission amount to a plurality of the electronic tag information management business operators P3.

To the terminal device 4 used by the electronic tag information management business operator P3, an electronic tag reader and writer 7c (first reading and writing device) and a DB server 9 (management server) are conected. The DB server 9 manages the surplus emission amount allocated to the electronic tag 6, the name of the business operator (product sales business operator P1) that has registered the surplus emission amount, the account number of the account (referred to as an emission allowance account, in the following) by which the emission allowance is managed, and the name of the emission allowance account management business operator managing the account. Details of the DB server 9 will be described later. A plurality of the terminal devices 4 may be prepared, and there also may be a plurality of the electronic tag reader and writers 7c connected to the terminal device 4.

A selling side emission allowance account management business operator P4 manages the emission allowance account of the product sales business operator P1, and a buying side emission allowance account management business operator P5 manages the emission allowance account of the electronic tag purchasing business operator P2. The selling side emission allowance account management business operator P4 and the electronic tag information management business operator P3 may be an identical business operator.

An emission allowance account DB server 5a (settlement server) is installed at the selling side emission allowance account management business operator P4, and an emission allowance account DB server 5b (settlement server) is installed at the buying side emission allowance account management business operator P5. The emission allowance account DB server 5a and the emission allowance account DB server 5b manage emission allowances based on account numbers in trading units. Accordingly, it is required that the product sales business operator P1 has at least one or more accounts managed by the selling side emission allowance account management business operator P4 and the electronic tag purchasing business operator P2 has one or more accounts managed by the buying side emission allowance account management business operator P5. A single business operator (the product sales business operator P1 or the electronic tag purchasing business operator P2) may have a plurality of accounts.

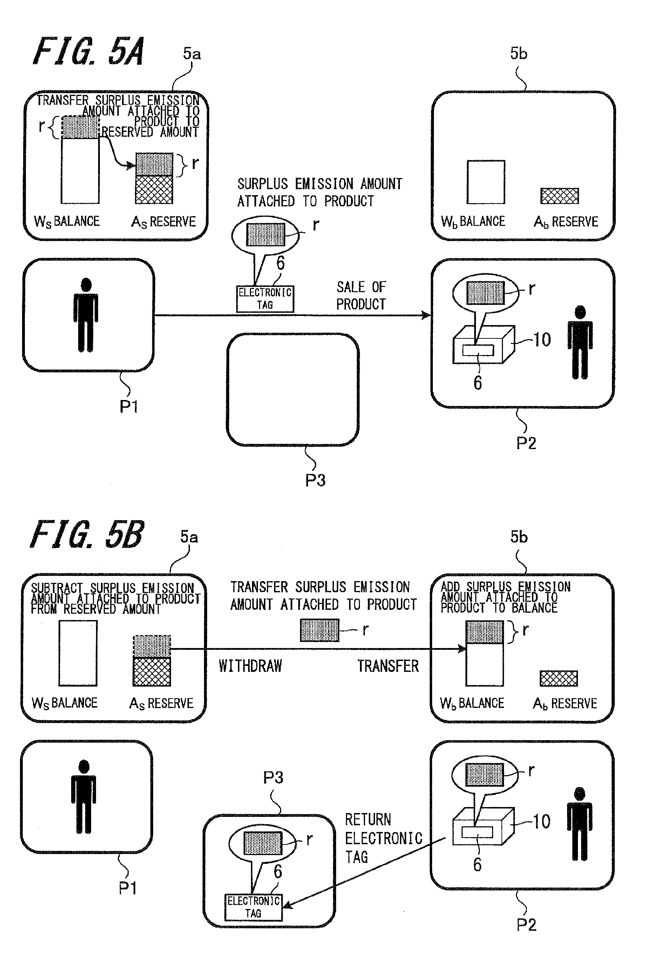

FIGS. 5A and 5B illustrate exemplary management of an emission allowance account by the emission allowance account DB server 5a of the selling side emission allowance account management business operator P4 and the emission allowance account DB server 5b of the buying side emission allowance account management business operator P5. FIG. 5A illustrates a process in a phase where the product 10 with the electronic tag 6 or the electronic tag 6 is sold, and FIG. 5B illustrates a process in a phase where the surplus emission amount is settled by returning the electronic tag 6.

As shown in FIG. 5A, the gross weight of the surplus emission amount is managed as a "balance" Ws in the emission allowance account DB server 5a of the selling side emission allowance account management business operator P4. Subsequently, when the surplus emission amount is attached to the product 10 by the product sales business operator P1, a weight r equivalent to the attached surplus emission amount is subtracted from the balance Ws by the emission allowance account DB server 5a of the selling side emission allowance account management business operator P4 and transferred to a "reserve" As. This is intended to treat the surplus emission amount attached to the product 10 as a reserve to prevent an allocation which exceeds the balance, since the surplus emission amount attached to the product 10 will be eventually requested from the electronic tag information management business operator P3 to be transferred thereto.

The emission allowance account DB server 5b of the buying side emission allowance account management business operator P5 manages the surplus emission amount owned by the electronic tag purchasing business operator P2 at the time as a balance Wb and a reserve Ab.

As shown in FIG. 5B, returning the electronic tag 6 from the electronic tag purchasing business operator P2 to the electronic tag information management business operator P3 causes the emission allowance account DB server 5a of the selling side emission allowance account management business operator P4 and the emission allowance account DB server 5b of the buying side emission allowance account management business operator P5 to perform a settlement process.

First, upon returning the electronic tag 6 from the electronic tag purchasing business operator P2 to the electronic tag information management business operator P3, the weight r equivalent to the surplus emission amount attached to the product 10 is subtracted from the reserve As in the emission allowance account DB server 5a of the selling side emission allowance account management business operator P4. Accordingly, an amount equivalent to the weight r is withdrawn from the account of the product sales business operator P1 managed by the selling side emission allowance account management business operator P4. The weight r subtracted from the reserve As is transferred to the emission allowance account DB server 5b of the buying side emission allowance account management business operator P5 and added to the balance Wb. The amount equivalent to the weight r will be transferred to the account of the electronic tag purchasing business operator P2 managed by the buying side emission allowance account management business operator P5.

In the system according to the present embodiment, while withdrawal from an account (a transfer process of the surplus emission amount) is permitted only to the owner of the account or the emission allowance account management business operator managing the account, anybody can perform transfer to and check of the account.

### [3. Exemplary internal configuration of the system]

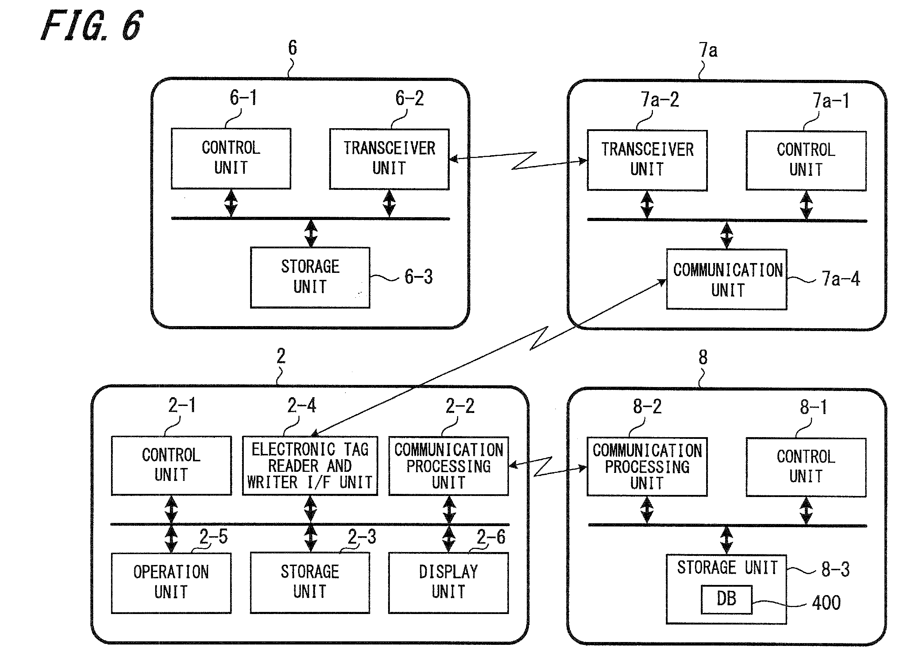

Next, an exemplary internal configuration of the system will be described based on FIGS. 6 to 9.

FIG.6 is a block diagram illustrating an exemplary internal configuration of each device composing a system of the product sales business operator P1. In FIG. 6, identical reference numerals are provided to elements corresponding to those of FIGS. 3 and 4.

### <Exemplary configuration of the electronic tag 6>

The electronic tag 6 comprises a control unit 6-1, a transceiver unit 6-2, and a storage unit 6-3. The control unit 6-1, including an MPU (Micro Processing Unit) or the like, controls each part in the electronic tag 6. The storage unit 6-3, including a semiconductor memory or the like, stores an identifier of the electronic tag 6. The transceiver unit 6-2 communicates with the electronic tag reader and writer 7a based on the control by the control unit 6-1, and transmits the identifier stored in the storage unit 6-3 to the electronic tag reader and writer 7a.

### <Exemplary configuration of the electronic tag reader and writer 7a>

The electronic tag reader and writer 7a comprises a control unit 7a-1, a transceiver unit 7a-2, and a communication unit 7a-4. The control unit 7a-1 controls each of the parts composing the electronic tag reader and writer 7a. The transceiver unit 7a-2 communicates with the electronic tag 6, based on the control by the control unit 7a-1, and receives the identifier stored in the electronic tag 6. The communication unit 7a-4 transmits, based on the control by the control unit 7a-1, the identifier received from the electronic tag 6 to the terminal device 2.

### <Exemplary configuration of the terminal device 2>

The terminal device 2 comprises a control unit 2-1, a communication processing unit 2-2, a storage unit 2-3, an electronic tag reader and writer interface (I/F) unit 2-4, an operation unit 2-5, and a display unit 2-6.

The control unit 2-1 controls each part of the terminal device 2. The electronic tag reader and writer I/F unit 2-4 receives, based on the control by the control unit 2-1, the identifier of the electronic tag 6 transmitted from the electronic tag reader and writer 7a and feeds it to the control unit 2-1. The communication processing unit 2-2 transmits, based on the control by the control unit 2-1, the identifier of the electronic tag 6 received from the electronic tag reader and writer 7a to a DB server 8. The operation unit 2-5, including a keyboard and a mouse (both not shown), generates, based on an instruction input by a user, an instruction signal according to the instruction and feeds it to the control unit 2-1.

The storage unit 2-3, including an HDD (Hard Disk Drive) or the like, stores various programs and data for the control unit 2-1 to perform various types of control. The display unit 2-6, including an LCD (Liquid Crystal Display) or the like, displays various notifications or the like on the screen, based on the control by the control unit 2-1.

### <Configuration of the DB server 8>

The DB server 8 comprises a control unit 8-1, a communication processing unit 8-2, and a storage unit 8-3. The communication processing unit 8-2 receives, based on the control by the control unit 8-1, the identifier of the electronic tag 6 transmitted from the terminal device 2, via the network 1 (see FIG. 4), and feeds it to the control unit 8-1.

The storage unit 8-3 includes an HDD or the like and stores various programs and data for the control unit 8-1 to perform various types of control. In addition, the storage unit 8-3 has a DB 400 (third database) stored therein. The DB 400 has registered therein a variety of information required to operate the electronic tag 6. An exemplary configuration of the DB 400 will be described later. The control unit 8-1 controls each of the parts composing DB server 8. For example, it controls writing of data into the DB 400, reading of data from the DB 400, etc.

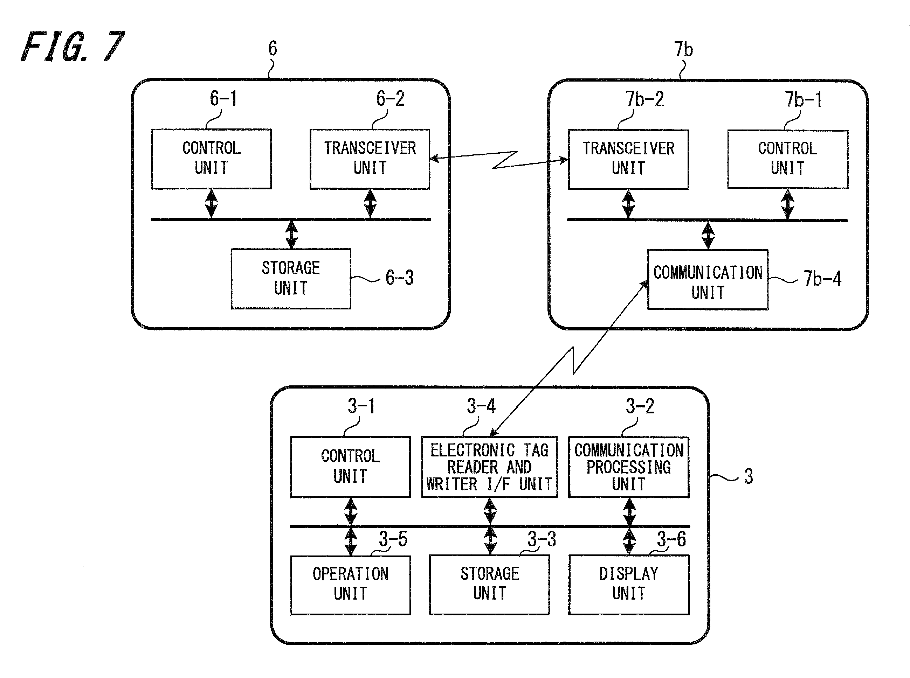

FIG.7 is a block diagram illustrating an exemplary internal configuration of each device composing a system of the electronic tag purchasing business operator P2. In FIG. 7, identical reference numerals are provided to elements corresponding to those of FIGS. 3, 4, and 6. The system of the electronic tag purchasing business operator P2 comprises the electronic tag reader and writer 7b which reads and writes the electronic tag 6, and a terminal device 3. Since the configurations of the electronic tag reader and writer 7b and the terminal device 3 are substantially identical to those of the system shown in FIG. 6, description thereof is omitted.

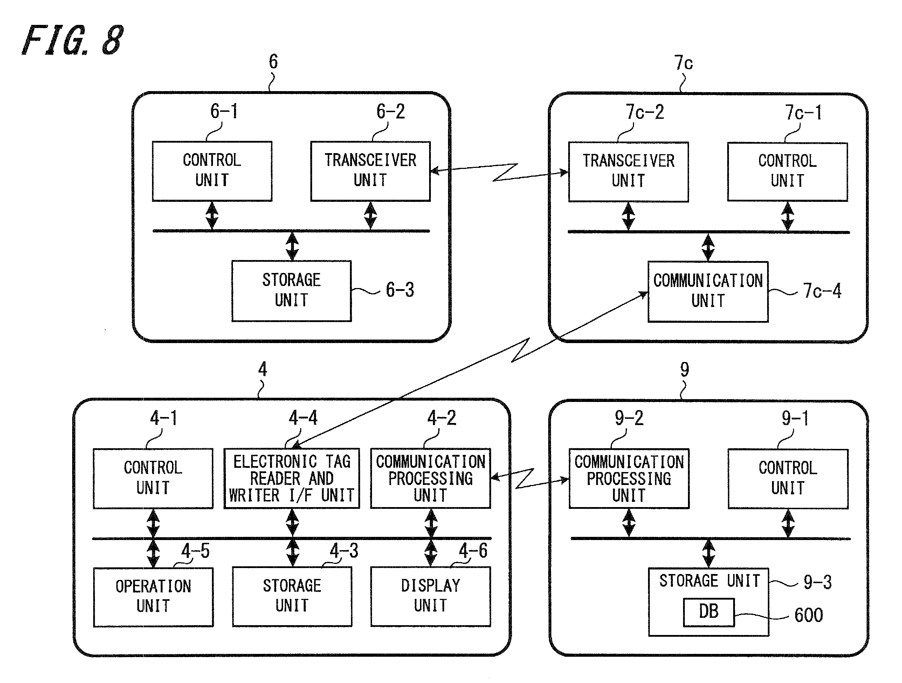

FIG.8 is a block diagram illustrating an exemplary internal configuration of each device composing a system of the electronic tag information management business operator P3. In FIG. 8, identical reference numerals are provided to elements corresponding to those of FIGS. 3, 4, 6, and 7. The system of the electronic tag information management business operator P3 comprises the electronic tag reader and writer 7c which reads and writes the electronic tag 6, the terminal device 4, and the DB server 9. The electronic tag reader and writer 7c has the same configuration as the electronic tag reader and writer 7b shown in FIG. 7, and the terminal device 4 has the same configuration as the terminal device 2 shown in FIG. 6 and the terminal device 3 shown in FIG. 7. In addition, the DB server 9 has a DB 600 (first database) stored therein. Since the rest of the configuration of the DB server 9 is substantially identical to that of the DB server 8 shown in FIG. 6, description thereof is omitted.

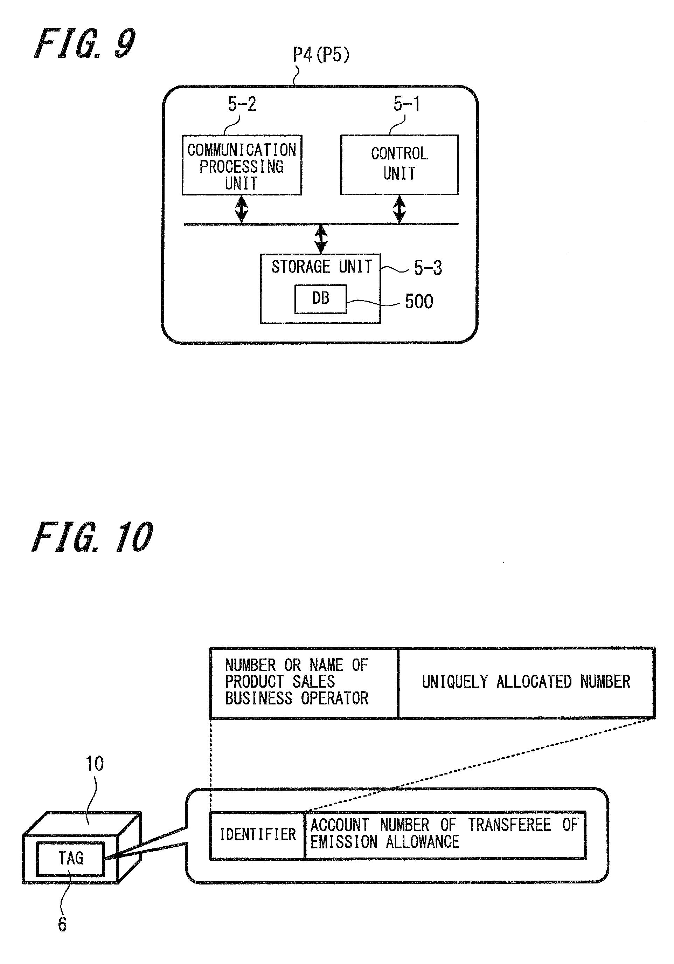

FIG.9 is a block diagram illustrating an exemplary internal configuration of a system of the selling side emission allowance account management business operator P4 or the buying side emission allowance account management business operator P5 (i.e., the emission allowance account DB server 5a or 5b). Here, the selling side emission allowance account management business operator P4 and the buying side emission allowance account management business operator P5 are both referred to as "an emission allowance account management business operator".

The system (emission allowance account DB server 5a or 5b) of the emission allowance account management business operator comprises a control unit 5-1 (second control unit), a communication processing unit 5-2, and a storage unit 5-3. The communication processing unit 5-2 transmits or receives the data exchanged between the product sales business operator P1 and the electronic tag information management business operator P3 via the network 1. The storage unit 5-3 includes an HDD or the like and stores various programs and data for the control unit 5-1 to perform various types of control. In addition, the storage unit 5-3 includes a DB 500 (second database) . The DB 500 has stored therein information of the account of the product sales business operator P1 and the electronic tag information management business operator P3, balance information of an emission allowance, and reserve information. An exemplary configuration of DB500 will be described later.

The control unit 5-1 includes an MPU or the like and controls each part of the system (emission allowance account DB server 5a or 5b) of the emission allowance account management business operator. For example, it controls writing data into the DB 500, reading data from the DB 500, etc.

### [4. Exemplary data structure in the electronic tag]

Next, referring to FIG. 10, the data structure in the electronic tag 6 will be described. The storage unit 6-3 (see FIG. 6) in the electronic tag 6 has stored therein an identifier for identifying each electronic tag 6 and an account number of a transferee of the emission allowance. The identifier includes the number or name of the product sales business operator P1, and a uniquely allocated identifier of the electronic tag 6. It is assumed that the identifier uniquely allocated to the electronic tag 6 is allocated at the semiconductor level at the time of manufacturing, etc. In other words, it cannot be changed. The account number information of the transferee of the emission allowance is used when making a settlement of the emission allowance.

### [5. Exemplary construction of each database]

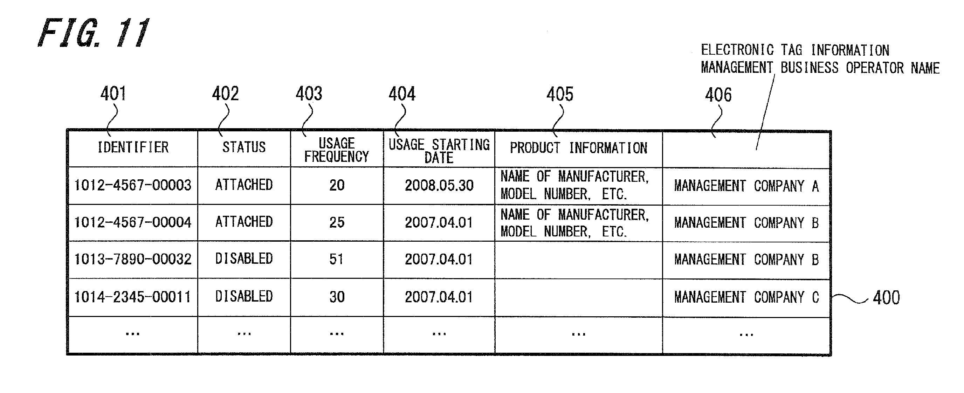

Next, the database structure of each business operator will be described, based on FIGS. 11 to 14. FIG. 11 illustrates a table structure of the DB 400 of the product sales business operator P1. As shown in FIG. 11, the DB 400 has recorded therein an identifier 401 allocated to each electronic tag 6, a status 402, a usage frequency 403, a usage starting date 404, product information 405, and an electronic tag information management business operator name 406.

The status 402 indicates the state of the electronic tag 6, such as, whether the electronic tag 6 is being attached to the product 10, etc. If the electronic tag 6 is attached to the product 10, the field is set as "attaches". In a state where the electronic tag 6 is disabled, the field is set as "disabled". Disabling the electronic tag 6 is performed for the purpose of preventing the settlement process from being executed again using the electronic tag 6 when the electronic tag 6 is returned from the electronic tag purchasing business operator P2.

The usage frequency 403 indicates the usage frequency of the electronic tag 6 itself. The electronic tag 6 which was disabled once can be made available again, and its usage frequency is managed by the field of usage frequency 403. The usage starting date 404 has recorded therein information of the date on which usage of the electronic tag 6 started. As thus described, managing the usage frequency and the usage starting date allows a process of disposing the electronic tag 6 without recycling it when a predetermined usage frequency or elapsed days from the usage starting date are exceeded. The product information 405 has recorded therein information related to the product 10, such as the name of the manufacturer that produced the product 10, information of the model number of the product 10, etc. The electronic tag information management business operator name 406 has the name of the electronic tag information management business operator P3 recorded therein.

According to the example shown in FIG. 11, it can be seen that the electronic tag 6 having an identifier "1012-4567-00003" is currently attached to the product 10, and has been used 20 times up to now since its usage started on May 30, 2008. In addition to the manufacturer name and the model number of the product 10 to which the electronic tag 6 is attached, it can be seen that the electronic tag information management business operator P3 is "management company A".

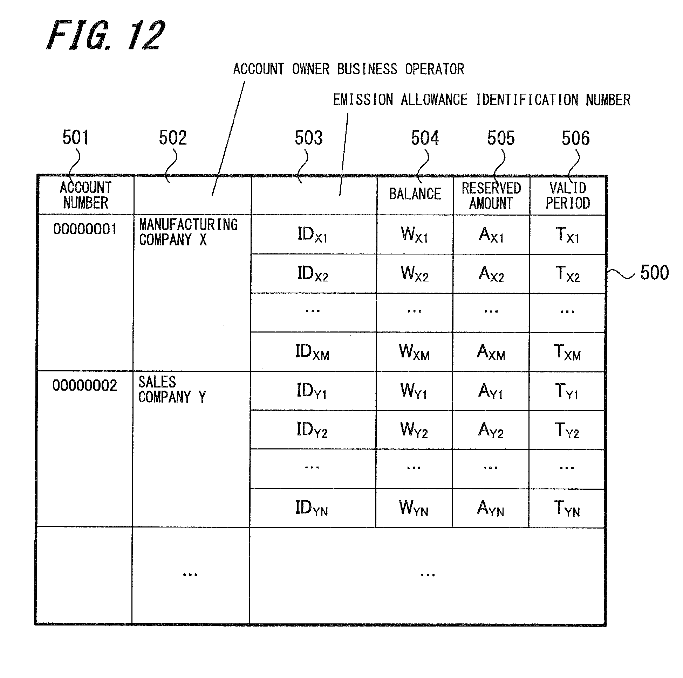

FIG. 12 illustrates a table structure of the DB 500 of an emission allowance account management business operator. It is assumed that the structure of the DB 500 shown in FIG. 12 is common to both the selling side emission allowance account management business operator P4 and the buying side emission allowance account management business operator P5. As shown in FIG. 12, the DB 500 has recorded therein an account number 501 of the product sales business operator P1 or the electronic tag purchasing business operator P2, followed by an account possession business operator name 502. In addition, an emission allowance identification number 503 has recorded therein an identification number allocated for each emission allowance of predetermined unit weight. The identification number of each emission allowance (referred to as the emission allowance identification number, in the following), for example, is a number issued by a certification organization such as the United Nations. Respective emission allowances managed by each emission allowance identification number may have different trading prices depending on the type and source.

In the example shown in FIG. 12, it is recorded that a manufacturing company X having an account number "00000001" owns M units of emission allowances which are managed by emission allowance identification numbers ID_{X1} to ID_{XM}. It is also recorded that a sales company Y having an account number "00000002" owns N units of emission allowances managed by emission allowance identification numbers ID_{Y1} to ID_{YN}.

In each of the emission allowances managed by the emission allowance identification numbers, information of a balance 504, a reserve 505, and a valid period 506 are managed.

The balance 504 has recorded therein a remaining weight obtained by subtracting, from the gross weight of an emission allowance managed by an emission allowance identification number, the weight equivalent to the surplus emission amount attached to the product 10 and transferred to the reserve As. The reserve 505 has recorded therein the weight transferred to the reserve As. The valid period 506 has recorded therein a valid period of an emission allowance managed by each emission allowance identification number. It is assumed that an arbitrary format is allowed for the notation of the valid period.

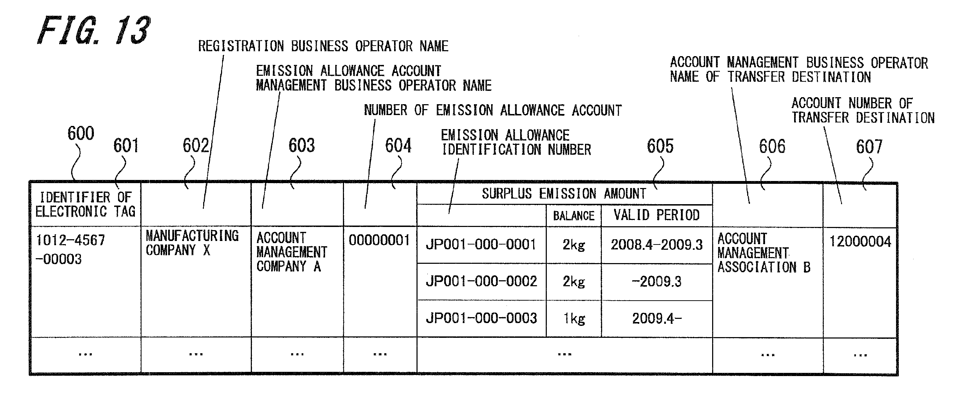

FIG. 13 illustrates a table structure of the DB 600 of the electronic tag information management business operator P3. As shown in FIG. 13, the DB 600 of the electronic tag information management business operator P3 has recorded therein an identifier 601 allocated for each of the electronic tags 6, a registration business operator name 602 that has registered the surplus emission amount relating to each product 10 with the DB 600, and an account management business operator name 603 relating to the emission allowance attached to each product 10. The account management business operator name 603 may have registered therein a unique number or symbol allocated to each business operator instead of the name. The registration business operator name 602 is the product sales business operator P1 in the present embodiment.

The DB 600 of the electronic tag information management business operator P3 has further recorded therein a number 604 of an emission allowance account relating to the product 10, a surplus emission amount 605, an account management business operator name 606 of a transfer destination of the emission allowance, and an account number 607 of the transfer destination. The "transfer destination" mentioned here is the transfer destination of the emission allowance, corresponding to the electronic tag purchasing business operator P2 in the present embodiment.

Also in the DB 600, the surplus emission amount 605 is managed by each emission allowance identification number. For example, to the electronic tag 6 having an identifier "1012-4567-00003", an emission allowance managed by an emission allowance identification number "JP001-000-0001", an emission allowance managed by "JP001-000-0002", and an emission allowance managed by "JP001-000-0003" are allocated. For example, it can be seen that the remaining amount of the emission allowance managed by the emission allowance identification number "JP001-000-0001" is 2 kg.

### [6. Exemplary operation of the system]

Next, an exemplary operation of the system according to the present embodiment will be described. Since there is a plurality of phases from selling/buying the electronic tag 6 with an emission allowance to making a settlement of the emission allowance in the system according to the present embodiment, description will be provided for each phase in the following order.
(1) Exemplary operation of the sales phase
(2) Exemplary operation of the transfer phase
(3) Exemplary operation of the emission allowance reference phase
(4) Exemplary operation of the electronic tag returning phase
(5) Exemplary operation of the settlement phase

### (1) Exemplary operation of the sales phase

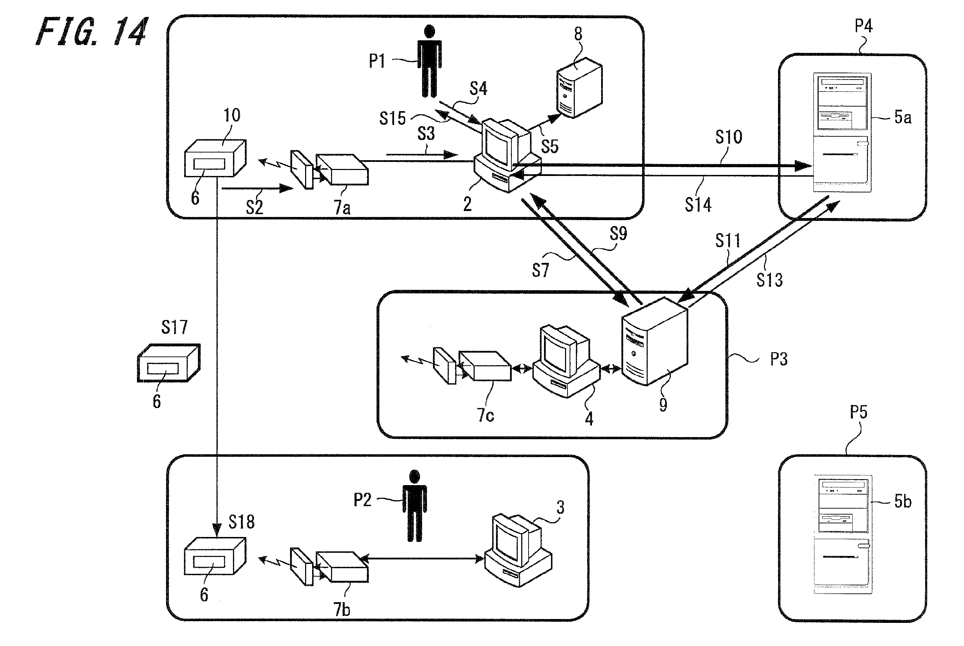

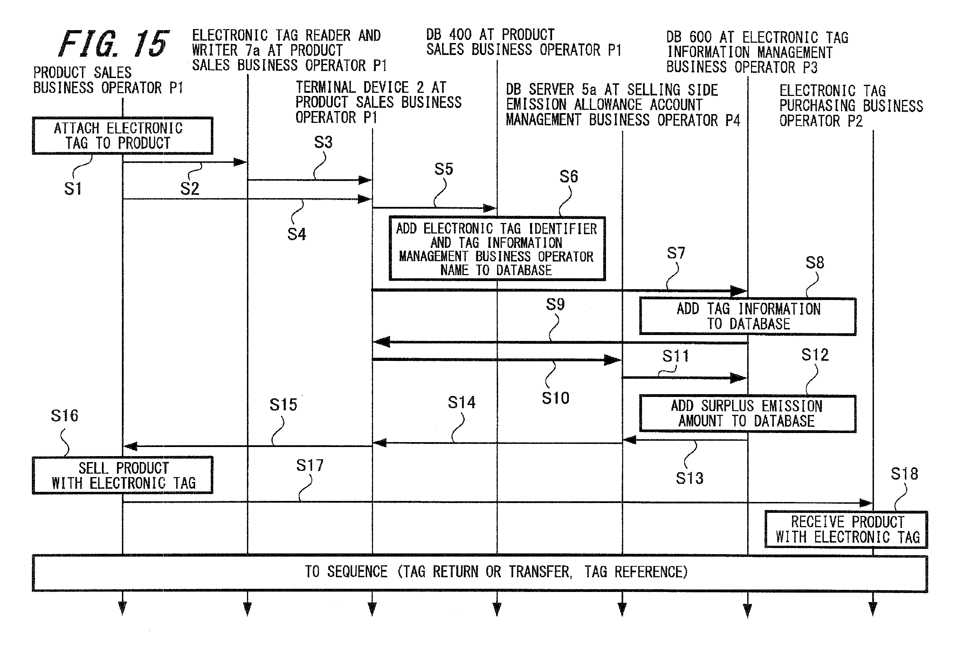

FIG. 14 is a system configuration diagram illustrating a configuration of the system according to the embodiment of the present invention in terms of the sales phase. The configuration of the system corresponds to that of FIG. 4 with a process flow being added. FIG.15 is a sequence diagram illustrating a process between respective devices of the system in the sales phase. In FIGS. 14 and 15, identical reference numerals are provided to indicate the procedure of the processes. Additionally, the thick lines in FIGS. 14 and 15 indicate that authenticated communication is performed there.

The sales phase refers to a phase from attaching the electronic tag 6 to the product 10 by the product sales business operator P1 to buying the product 10 with the electronic tag 6 by the electronic tag purchasing business operator P2. In the sales phase, as shown in FIG. 14, the product sales business operator P1 first registers, in the DB server 8, an identifier of the electronic tag 6 to be attached to the product 10 and information related to the surplus emission amount attached to the product 10 in association with each other. The information thus registered is also transmitted to the electronic tag information management business operator P3 and the selling side emission allowance account management business operator P4. The surplus emission amount is registered in the DB 600 of the electronic tag information management business operator P3 upon determining at the selling side emission allowance account management business operator P4 whether or not to reserve. Then, after such a procedure is completed, the product 10 having the electronic tag 6 attached thereto is sold to the electronic tag purchasing business operator P2.

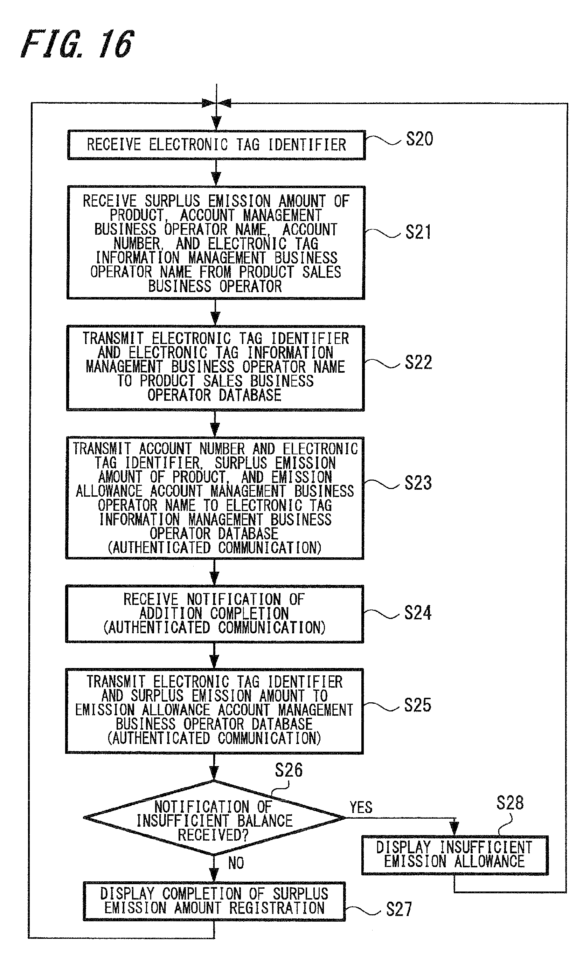

Next, an operation of the system in the sales phase shown in FIG. 14 will be first described based on the sequence diagram of FIG. 15. Subsequently, operations in the system at respective business operators will be described, referring to FIGS. 16 to 22.

In FIG. 15, the product sales business operator P1 first attaches the electronic tag 6 to the product 10 (step S1). The attached electronic tag 6 is read by the electronic tag reader and writer 7a (step S2), and the identifier of the read electronic tag is sent to the terminal device 2 (step S3).

Subsequently, at the terminal device 2, the surplus emission amount of the product 10, the emission allowance account management business operator names (P4, P5), the account numbers, and the electronic tag information management business operator name (P3) are input (step S4). The identifier of the electronic tag 6 received at step S3 and the electronic tag information management business operator name input at step S4 are sent to the DB server 8 of the product sales business operator P1 (step S5) and stored in the DB 400 of the DB server 8 (step S6).

Next, the account numbers, the electronic tag identifier, the surplus emission amount of the product, and the emission allowance account management business operator names (P4, P5) are sent from the terminal device 2 to the DB server 9 of the electronic tag information management business operator P3 via authenticated communication (step S7), and these pieces of information are added to the DB 600 of the DB server 9 at the electronic tag information management business operator P3 (step S8).

Then, a notification of addition completion indicating that addition of the tag information has been completed in the DB 600 at the electronic tag information management business operator P3 is sent to the terminal device 2 at the product sales business operator P1 (step S9). In turn, the account numbers, the electronic tag identifier, the surplus emission amount of the product, and the electronic tag information management business operator name are transmitted from the terminal device 2 to the emission allowance account DB server 5a at the selling side emission allowance account management business operator P4 via authenticated communication (step S10).

Subsequently, the electronic tag identifier and the surplus emission amount are sent from the emission allowance account DB server 5a at the selling side emission allowance account management business operator P4 to the DB 600 at the electronic tag information management business operator P3 via authenticated communication (step S11), and as a result, the surplus emission amount is added to the DB 600 at the electronic tag information management business operator P3 (step S12).

Next, the DB server 5a at the selling side emission allowance account management business operator P4 is notified of completion of the addition from the DB server 9 of the electronic tag information management business operator P3 (step S13), and subsequently a notification of completion of reserve and transfer is sent from the DB server 5a at the selling side emission allowance account management business operator P4 to the terminal device 2 at the product sales business operator P1 (step S14). Upon receiving it, the terminal device 2 notifies the product sales business operator P1 that registration of the surplus emission amount has been completed (step S15), and the product sales business operator P1 starts selling the product 10 with the electronic tag 6 (step S16). The product 10 with the electronic tag 6 is then delivered to the electronic tag purchasing business operator P2 (step S17), and the electronic tag purchasing business operator P2 receives the product 10 (step S18). The sequence of the selling side is thus completed.

### <Description of the process in the terminal device 2>

Next, the process in the terminal device 2 according to the embodiment of the present invention will be described in further detail based on the flowchart of FIG. 16. First, the product sales business operator P1 scans the electronic tag 6 attached to each product 10 with the electronic tag reader and writer 7a, whereby the identifier of the electronic tag 6 is received by the electronic tag reader and writer 7a (step S20). Subsequently, the product sales business operator P1 inputs various data such as the surplus emission amount of the product 10, the emission alloance account management business operator names (P4, P5), the account numbers, and the electronic tag information management business operator name (P3) to the terminal device 2 (step S21). Then, the input electronic tag identifier, the surplus emission amount of the product, the emission alloance account management business operator names (P4, P5), the account numbers, and the electronic tag information management business operator name (P3) are transmitted from the terminal device 2 to the DB 400 of the DB server 8 (step S22).

Next, the account numbers, the electronic tag identifier, the surplus emission amount of the product, and the emission allowance account management business operator names (P4, P5) are transmitted from the terminal device 2 to the DB 600 at the electronic tag information management business operator P3 via authenticated communication (step S23). If a notification of addition completion is transmitted from the electronic tag information management business operator P3, it is received by the terminal device 2 (step S24).

Subsequently, the terminal device 2 transmits the electronic tag identifier and the surplus emission amount to the DB 500 of the selling side emission allowance account management business operator P4 via authenticated communication (step S25). Next, the terminal device 2 determines whether or not a notification of insufficient balance has been received from the selling side emission allowance account management business operator P4 (step S26). If it is determined at the determination step S26 that there is no notification of insufficient balance, a notification of completion of surplus emission amount registration is displayed on the display unit 2-6 (step S27). If, on the other hand, it is determined at the determination step S26 that a notification of insufficient balance has been received, a notification of insufficient emission allowance is displayed and the process is canceled (step S28).

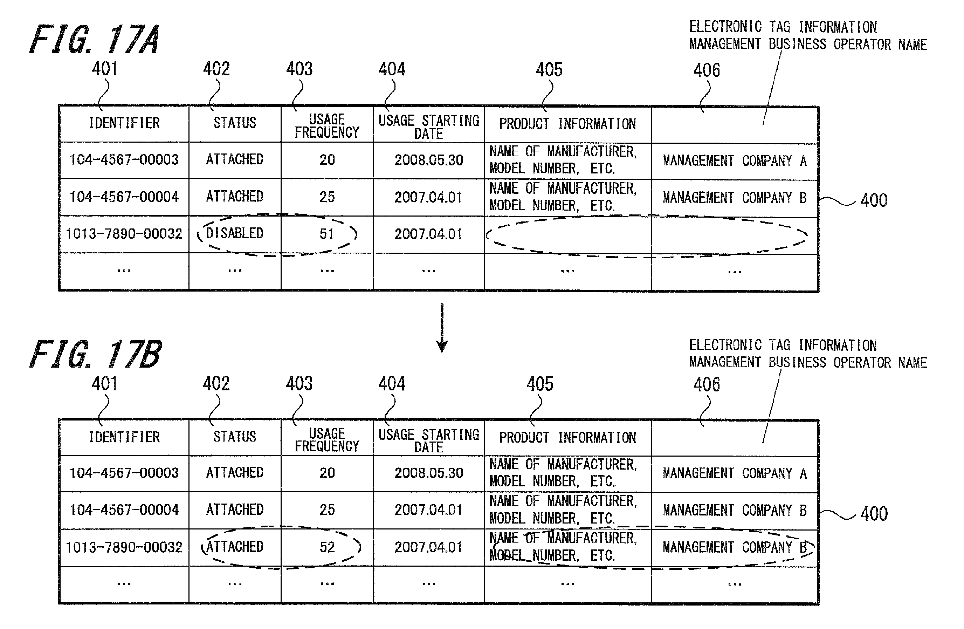

FIGS. 17A and 17B illustrate an exemplary data registration in the DB 400, where FIG. 17A indicates a state before information related to the electronic tag 6 is transmitted from the terminal device 2 at step S22 of FIG. 16 and FIG. 17B indicates a state after it has been transmitted. In FIGS. 17A and 17B, identical reference numerals are provided to elements corresponding to those of FIG. 11 and description thereof is omitted.

In the DB 400 shown in FIG. 17A, the product information 405 and the electronic tag information management business operator name 406 are not described as the information of the electronic tag 6 having an identifier "1013-7890-00032". When information is transmitted from the terminal device 2 in this state, the data registration state in the DB 400 becomes what is shown in FIG. 17B. In other words, a manufacturer name and a model number as well as other information are added to the product information 405, and "management company B" is added to the electronic tag information management business operator name 406. In addition, the status 402 is changed from "disabled" to "attached", and the usage frequency 403 is incremented from "51" to "52".

In other words, it can be seen that only the information of the identifier and the usage starting date is fixedly registered among information related to the electronic tag 6 registered in the DB 400, while other information may be written according to the usage status of the electronic tag 6.

### <Description of the process in the DB server 9 of the electronic tag information management business operator P3>

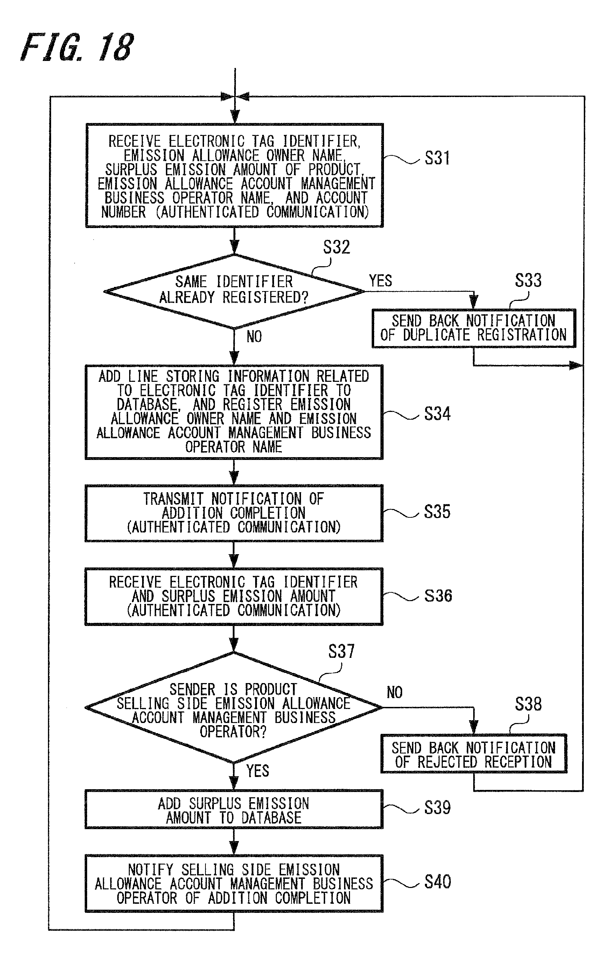

Next, an exemplary process in the DB server 9 of the electronic tag information management business operator P3 will be described based on the flowchart of FIG. 18. First, the DB server 9 of the electronic tag information management business operator P3 receives the electronic tag identifier, the emission allowance owner name (identical to the registration business operator name shown in 602 of FIG. 13), the surplus emission amount of the product, the emission allowance account management business operator names (P4, P5), and the account numbers from the terminal device 2 via authenticated communication (step S31).

Subsequently, it is determined whether or not the received electronic tag identifier has already been registered in the DB 600 (step S32). If it is determined that the received electronic tag identifier has already been registered, a notification of duplicate registration is transmitted to the sender (step S33). If it is determined at step S32 that an identical identifier has not been registered, a line for storing information related to the received electronic tag identifier is added to the DB 600, and the received electronic tag identifier and information of the selling side emission allowance account management business operator name P4 are input to the line (step S34).

Next, a notification of addition completion is transmitted to the terminal device 2 at the product sales business operator P1 via authenticated communication (step S35). Subsequently, the electronic tag identifier and the reserved surplus emission amount are received from the emission allowance account DB server 5a at the selling side emission allowance account management business operator P4 via authenticated communication (step S36), and it is determined, from the received electronic tag identifier, whether or not the sender is the selling side emission allowance account management business operator P4 (step S37).

If it is determined at step S37 that the sender is not the selling side emission allowance account management business operator P4, a notification of rejected reception is sent back to the sender (step S38). If, on the other hand, it is determined at step S37 that the sender is the selling side emission allowance account management business operator P4, the surplus emission amount relating to the electronic tag identifier is added (registered) to the DB 600 (step S39). A notification of addition completion is then transmitted to the selling side emission allowance account management business operator P4 via authenticated communication (step S40).

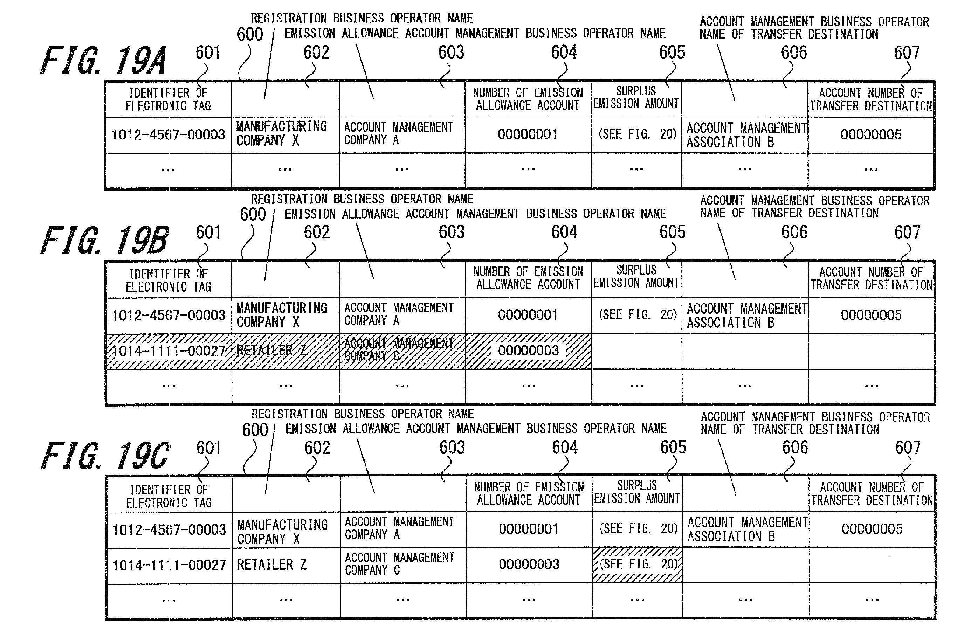

FIGS. 19A TO 19C are explanatory diagrams of the details of the registration process to the DB 600 at steps S34 and S39 of FIG. 18. FIG. 19A illustrates an exemplary data registration in the DB 600 before the information related to the electronic tag 6 is transmitted from the terminal device 2 of the product sales business operator P1 at step S31 of FIG. 18.

FIG. 19B illustrates a state in which a line for storing information related to the electronic tag identifier has been added to the DB 600 at step S34 of FIG. 18, and the received electronic tag identifier and the information of the selling side emission allowance account management business operator P4 has been input to the line. For example, when the information received from the terminal device 2 at the product sales business operator P1 includes the following, the information is added to the parts indicated with slanted lines in FIG. 19B.
Electronic tag identifier: 1014-1111-00027
Registration business operator name: retailer Z
Emission allowance account management business operator name: account management association C
Emission allowance account number: 00000003

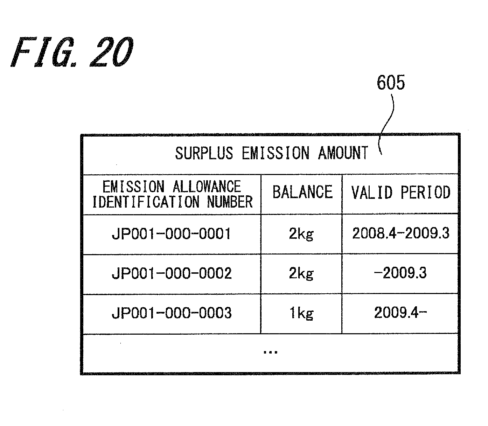

In addition, the surplus emission amount transmitted at step S39 of FIG. 18 is added to the part indicated with slanted lines in FIG. 19C. The part is displayed in an enlarged manner in FIG. 20. For example, when the information received from the terminal device 2 at the product sales business operator P1 includes the following, the information of the surplus emission amount is registered as shown in FIG. 20.
Emission allowance identification number: JP001-000-0001
Balance: 2kg
Valid period: 2008.4-2009.3
Emission allowance identification number: JP001-000-0002
Balance: 2kg
Valid period: -2009.3
Emission allowance identification number: JP001-000-0003
Balance: 1kg
Valid period: 2009.4-

### <Description of the process in the database of the selling side emission allowance account management business operator P4>

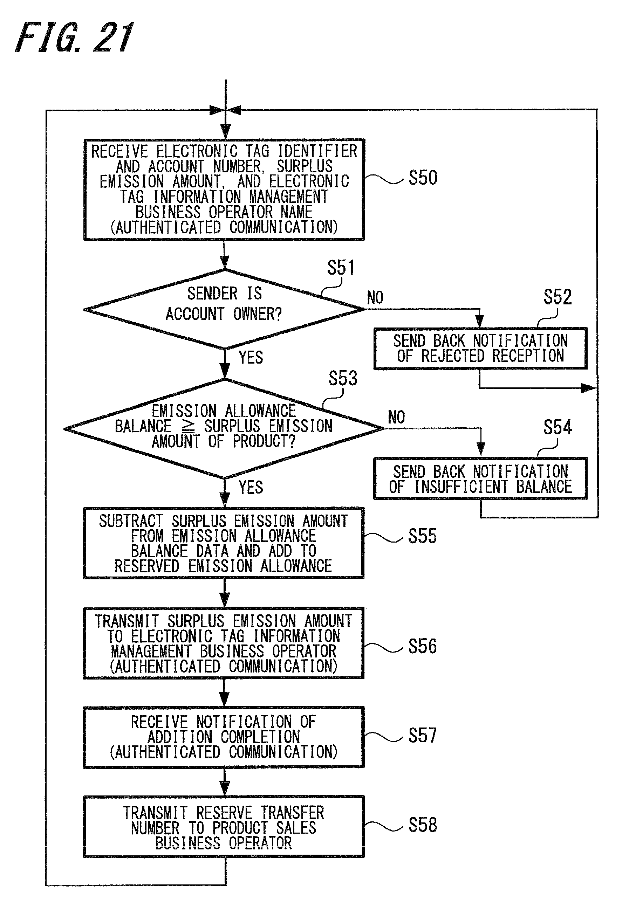

Next, an exemplary process performed at the selling side emission allowance account management business operator P4 will be described, based on the flowchart of FIG. 21. First, the emission allowance account DB server 5a (see FIG. 14) of the selling side emission allowance account management business operator P4 receives the electronic tag identifier, the account numbers, the surplus emission amount allocated to the product, and the electronic tag information management business operator name (P3) from the terminal device 2 at the product sales business operator P1 via authenticated communication (step S50) .

It is then determined whether or not the sender is the account owner (step S51) and, if the sender is not the account owner, a notification of rejected reception is sent back to the sender (step S52). If it is determined at step S51 that the sender corresponds to the account owner, it is next determined whether or not the emission allowance balance exceeds the surplus emission amount attached to the product 10 (step S53).

If the emission allowance balance is below the surplus emission amount attached to the product 10 at step S53, a notification of insufficient balance is communicated to the sender (step 554). If, on the other hand, it is determined at step S53 that the emission allowance balance exceeds the surplus emission amount attached to the product 10, a process of subtracting the surplus emission amount attached to the product 10 from the emission allowance balance and adding the surplus emission amount attached to the product 10 to the reserved emission allowance is performed (step S55). The process of the subtraction and addition is referred to as a "reserve process" in the following, and detailes thereof will be described later.

Subsequently, the surplus emission amount is transmitted to the electronic tag information management business operator P3 via authenticated communication (step 556), and a notification of completed addition transmitted from the electronic tag information management business operator P3 via authenticated communication is received (step S57). Finally, the account number, the electronic tag identifier, and the surplus emission amount are added to the emission allowance account DB server 5a, and a notification of completion of reserve and transfer is transmitted to the terminal device 2 at the product sales business operator P1 via authenticated communication (step S58).

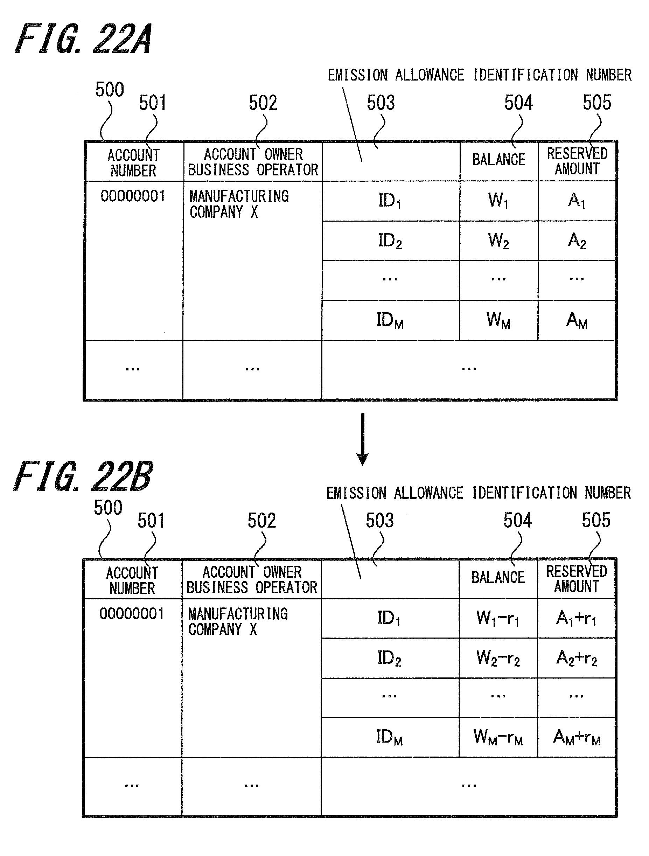

Next, an exemplary reserve process in the emission allowance account DB server 5a at the selling side emission allowance account management business operator P4 will be described, referring to FIGS. 22A and 22B. FIGS. 22A and 22B illustrate an exemplary data registration in the DB 500 of the emission allowance account DB server 5a, where FIG. 22A shows a state before the reserve process is performed and FIG. 22B shows a state after the reserve process has been performed. The reserve process mentioned herein refers to a process of subtracting the weight r equivalent to the surplus emission amount attached to the product 10 from the balance Ws and adding it to the reserve As described above referring to FIG. 5A.

As shown in FIG. 22A, the account number "00000001" recorded in the DB 500 manages the surplus emission amounts managed by the emission allowance identification numbers ID₁ to ID_{M}. For example, it is shown that the balance is W₁ and the reserved amount is A₁ for the surplus emission amount having the identification number ID₁, whereas the balance is W₂ and the reserved amount is A₂ for the surplus emission amount managed by the identification number ID₂.

When the surplus emission amounts managed by the emission allowance identification numbers ID₁ to ID_{M} are attached to the product 10 by the product sales business operator P1, data of the DB 500 is changed as shown in FIG. 22B. In other words, weights r₁ to r_{M} of surplus emission amounts allocated to the product 10 are subtracted from the balances W₁ to W_{M}, whereas the weights r₁ to r_{M} are added for the reserved amounts A₁ to A_{M}.

### (2) Exemplary operation of the transfer phase

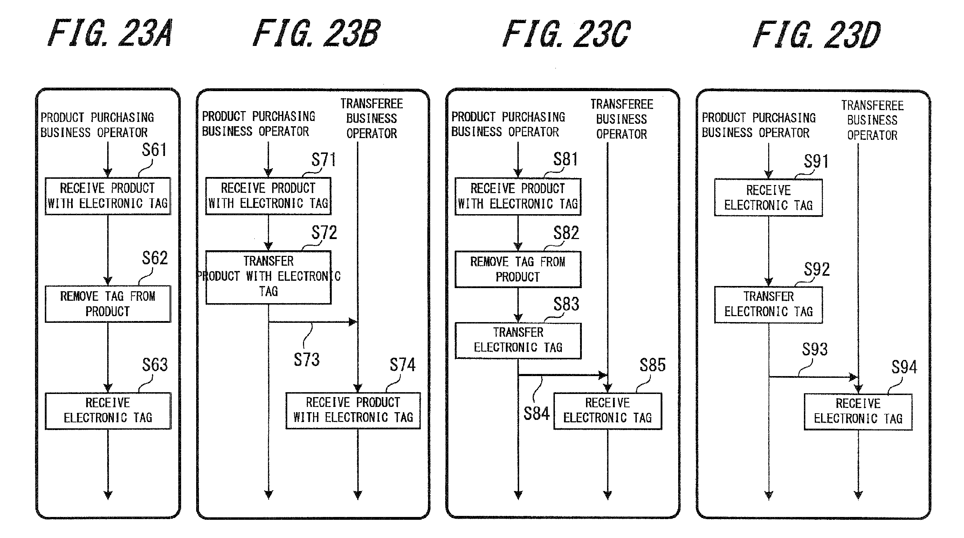

Next, an exemplary process in the transfer phase with the system according to the present embodiment will be described, referring to FIGS. 23A to 23D. In the system according to the present embodiment, although the buyer may directly use the product 10 having the electronic tag 6 attached thereto, the buyer can transfer it also. It is assumed that the act of transfer may be repeated zero times or more.

FIG. 23A is a flowchart illustrating an exemplary process when no transfer is performed. In FIG. 23A, the product purchasing business operator P2 receives the product 10 with the electronic tag 6 (step S61), and removes the electronic tag 6 from the product 10 (step S62). The electronic tag 6 is then acquired by the product purchasing business operator P2 who removed it from the product 10 (step S63). In other words, inthis case, the product purchasing business operator P2 has the right of making a settlement of the emission allowance allocated to the electronic tag 6.

FIG. 23B is a flowchart illustrating an exemplary process when the electronic tag 6 is transferred in a state of being attached to the product 10. First, the product purchasing business operator P2 receives the product 10 with the electronic tag 6 (step S71), and the product 10 having the electronic tag 6 attached thereto is transferred to a transferee business operator (step S72). In other words, the product 10 with the electronic tag 6 is transferred to the transferee business operator (step S73). The transferee business operator receives the product 10 with the electronic tag 6 (step S74). In this case, the transferee business operator has the right of settling the emission allowance allocated to the electronic tag 6.

FIG. 23C is a flowchart illustrating an exemplary case when the electronic tag 6 removed from the product 10 is transferred alone. First the product purchasing business operator P2 receives the product 10 with the electronic tag 6 (step S81) and removes the electronic tag 6 from the product 10 (step S82). The electronic tag 6 is then transferred alone to the transferee business operator (step S83). In other words, the electronic tag 6 is transferred to the transferee business operator (step S84). The transferee business operator then receives the electronic tag 6 (step 585). Also in this case, the transferee business operator has the right of settling the emission allowance allocated to the electronic tag 6.

FIG. 23D is a flowchart illustrating an exemplary process when the electronic tag purchasing business operator P2 who originally bought only the electronic tag 6 transfers the electronic tag 6 to another transferee business operator. Upon reception of the electronic tag 6 by the electronic tag purchasing business operator P2 (step S91), transfer of the electronic tag 6 to the transferee business operator is performed (step S92). In other words, the electronic tag 6 is transferred to the transferee business operator (step S93), and the transferee business operator receives the electronic tag 6 (step S94) . Also in this case, the transferee business operator has the right of settling the emission allowance allocated to the electronic tag 6.

As thus described, with the system according to the present embodiment, other than making a settlement of the emission allowance allocated to the electronic tag 6 attached to the product 10 by removing the electronic tag 6 from the product 10, the product 10 with the electronic tag 6 attached or the electronic tag 6 removed from the product 10 can be transferred to another business operator. The transfer described above may include those performed free of charge, as well as those performed on a charged basis.

### (3) Exemplary operation of the emission allowance reference phase

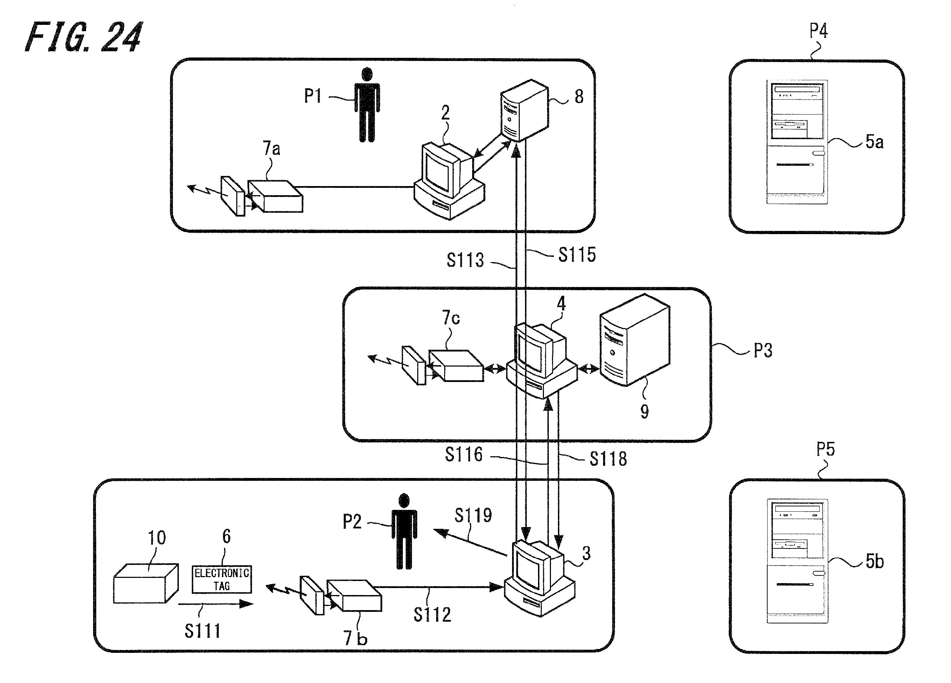

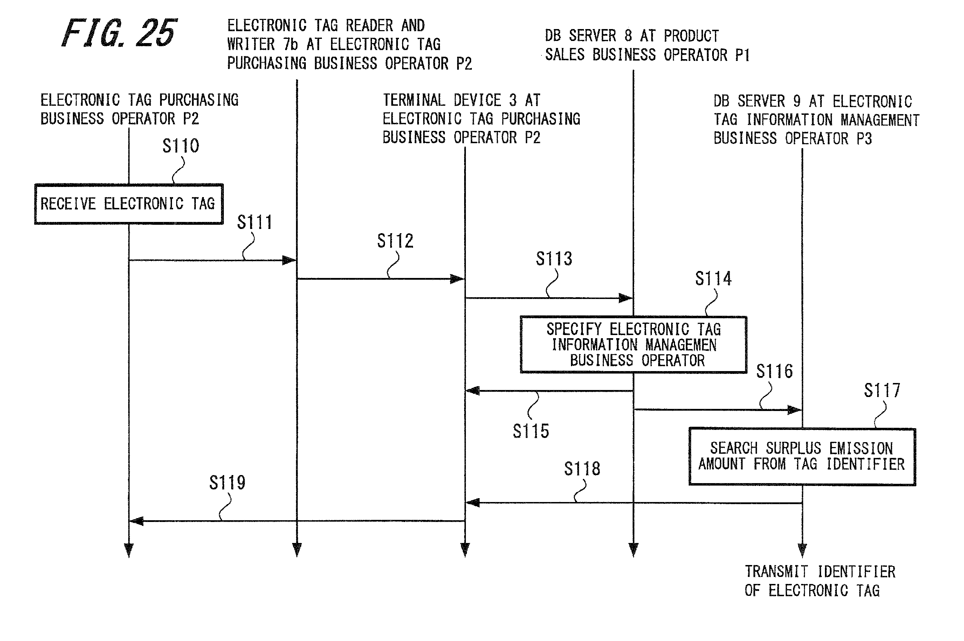

Next, an exemplary operation with the system in the emission allowance reference phase will be described, referring to FIGS. 24 and 25. In FIGS. 24 and 25, identical reference numerals are provided to indicate the procedure of the processes. The emission allowance reference phase refers to a phase in which the electronic tag purchasing business operator P2 who has received the product 10 with the electronic tag 6 or the electronic tag 6 alone refers the surplus emission amount allocated to the electronic tag 6. It is assumed that reference of the surplus emission amount may be performed zero times or more.

FIG. 24 is a system configuration diagram illustrating a configuration of the system according to the embodiment of the present invention in terms of the emission allowance reference phase. The configuration of the system corresponds to that shown in FIG. 4. As shown in FIG. 24, the electronic tag purchasing business operator P2 scans the electronic tag 6 with the electronic tag reader and writer 7b to acquire the identifier of the electronic tag 6. Then, the surplus emission amount allocated to the electronic tag 6 can be referred to by inquiring the electronic tag information management business operator P3 specified by the identifier about the surplus emission amount allocated to the electronic tag 6.

FIG. 25 is a sequence diagram illustrating an exemplary operation in each device in the emission allowance reference phase. First, when the electronic tag purchasing business operator P2 receives the electronic tag 6 (step S110) and the electronic tag 6 is read by the electronic tag reader and writer 7b (step S111), the identifier of the electronic tag 6 is transmitted from the electronic tag reader and writer 7b to the terminal device 3 at the electronic tag purchasing business operator P2 (step S112). The terminal device 3 then transmits the input identifier to the DB server 8 of the product sales business operator P1 based on control of the control unit 3-1 (see FIG. 7) (step S113).

The DB 400 is searched in the DB server 8 of the product sales business operator P1 based on control of the control unit 8-1 (see FIG. 6) with the identifier of the received electronic tag 6 serving as the key, whereby the electronic tag information management business operator P3 is specified (step S114). The information of the corresponding electronic tag information management business operator P3 is transmitted to the terminal device 3 of the electronic tag purchasing business operator P2 (step S115).

At the electronic tag purchasing business operator P2, the identifier of the electronic tag 6 is transmitted to the terminal device 4 of the electronic tag information management business operator P3 based on information transmitted from the product sales business operator P1 at step S115 (step S116).

The DB 600 is searched in the terminal device 4 of the electronic tag information management business operator P3 based on control of the control unit 9-1 (see FIG. 8) with the identifier of the received electronic tag 6 serving as the key (step S117). The information of the corresponding surplus emission amount is then transmitted to the terminal device 3 of the electronic tag purchasing business operator P2 (step S118). Subsequently, the emission allowance (surplus emission amount) allocated to the electronic tag 6 is displayed on the screen of the display unit 3-6 connected to the terminal device 3 (step S119).

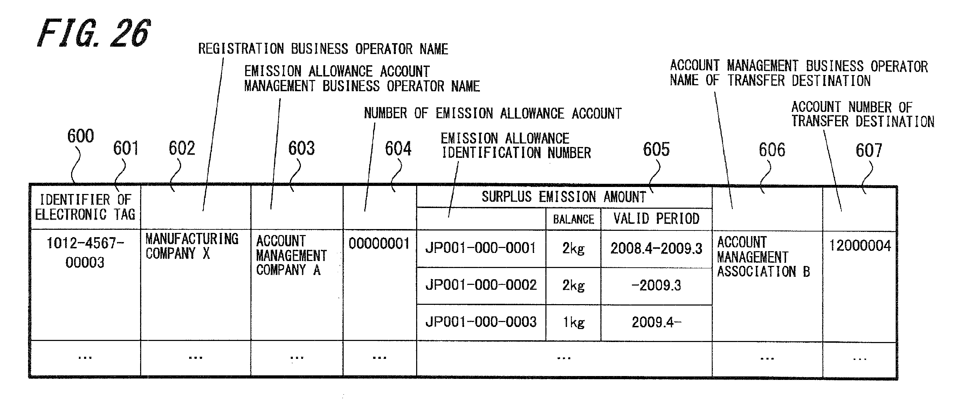

FIG. 26 illustrates an example of the DB 600 at the electronic tag information management business operator P3 referred to at step S117 of FIG. 25. In FIG. 26, identical reference numerals are provided to elements corresponding to those of FIG. 13 and detailed description thereof is omitted. When the identifier transmitted at step S116 of FIG. 25 is "1012-4567-00003", the following information is transmitted to the electronic tag purchasing business operator P2 as information of the surplus emission amount associated with "1012-4567-00003".
Emission allowance identification number: JP001-000-0001, Balance: 2kg, Valid period: 2008.4-2009.3
Emission allowance identification number: JP001-000-0002, Balance: 2kg, Valid period: -2009.3
Emission allowance identification number: JP001-000-0003, Balance: 1kg, Valid period: 2009.4-

### (4) Exemplary operation of the electronic tag returning phase

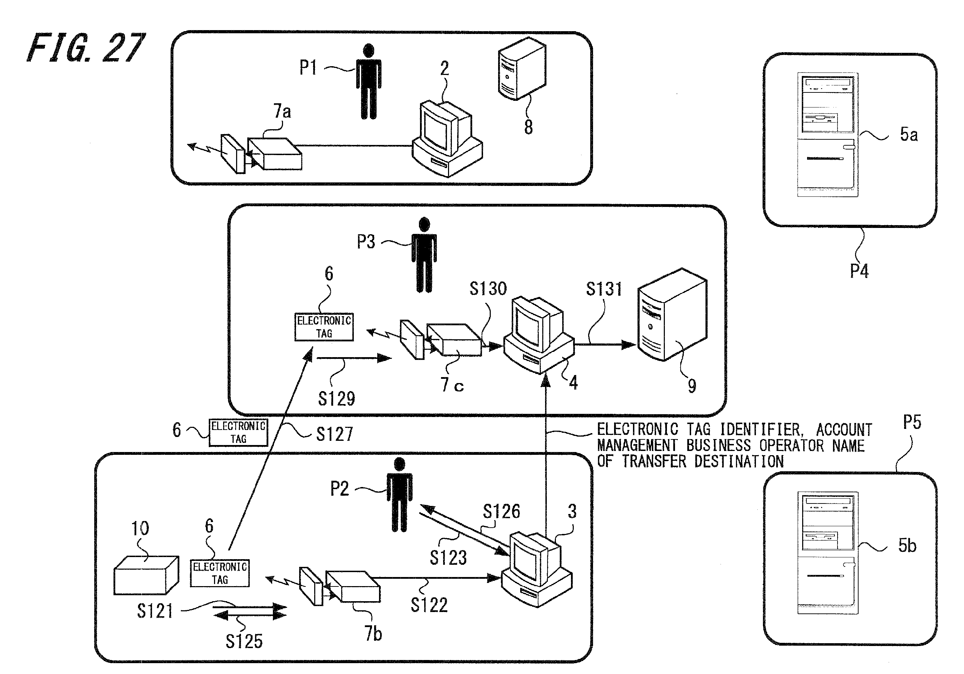

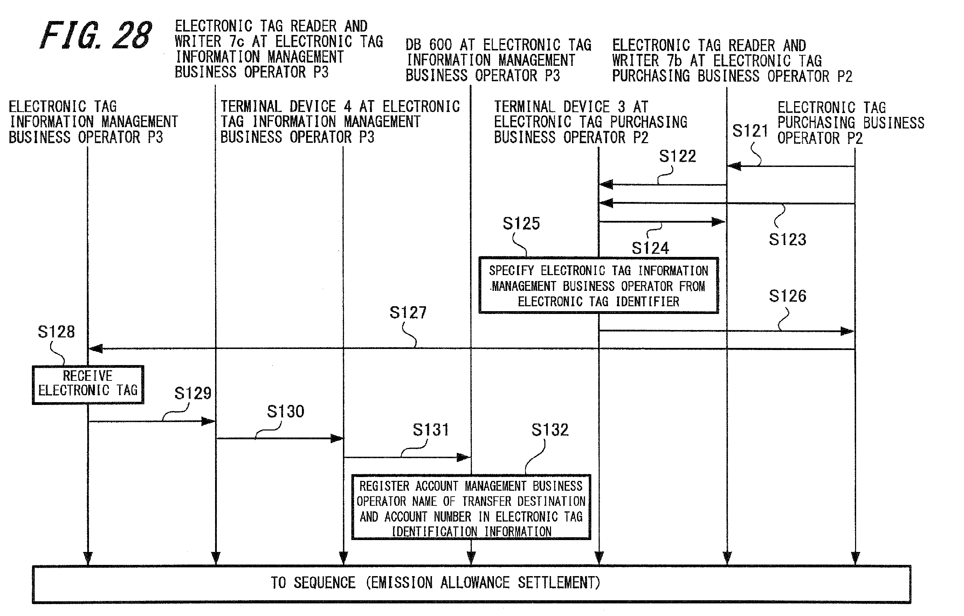

Next, an exemplary operation in the electronic tag returning phase in the system according to the present embodiment will be described, referring to FIGS. 27 and 28. In FIGS. 27 and 28, identical reference numerals are provided to indicate the procedure of the processes. The electronic tag returning phase refers to a phase in which the electronic tag purchasing business operator P2 who bought the product 10 with the electronic tag 6 or the electronic tag 6 alone returns the electronic tag 6 to the electronic tag information management business operator P3 in order to make a settlement of the emission allowance allocated to the electronic tag 6.

FIG. 27 is a system configuration diagram illustrating a configuration of the system according to the embodiment of the present invention in terms of the electronic tag returning phase. The configuration of the system corresponds to that of FIG. 4 with a process flow being added. As shown in FIG. 27, the electronic tag purchasing business operator P2 who wants to make a settlement for the electronic tag 6 writes information, such as the account number required when making a settlement, on the electronic tag 6, and returns the electronic tag 6 to the electronic tag information management business operator P3 (the case when information such as the account number cannot be written on the electronic tag 6 will be described later). Subsequently, information recorded on the electronic tag 6 is written in the DB 600 at the electronic tag information management business operator P3 who received the electronic tag 6.

FIG.28 is a sequence diagram illustrating an exemplary operation in each device in the electronic tag returning phase. First, the electronic tag purchasing business operator P2 causes the electronic tag reader and writer 7b to read the electronic tag 6 to be settled (step S121), and the identifier of the electronic tag 6 is transmitted from the electronic tag reader and writer 7b to the terminal device 3 (step S122). In addition, information such as the name of the buying side emission allowance account management business operator P5 and the account number to which transfer is desired to be made is input to the terminal device 3 by the electronic tag purchasing business operator P2 (step S123).

Subsequently, an instruction for writing on the electronic tag 6 the name and the account number to which transfer is desired to be made of the buying side emission allowance account management business operator P5 is provided from the terminal device 3 to the electronic tag reader and writer 7b (step S124). Based on the instruction, these pieces of information are actually written on the electronic tag 6. Additionally, on the terminal device 3, a process of specifying the electronic tag information management business operator P3 from the identifier of the electronic tag 6 transmitted at step S122 is performed (step S125). In other words, the terminal device 3 transmits the identifier of the electgronic tag 6 to the product sales business operator P1, inquires who is the electronic tag information management business operator P3, and receives the information transmitted from the product sales business operator P1, whereby information of the electronic tag information management business operator P3 is acquired. In the terminal device 3, the acquired information of the electronic tag information management business operator P3 is displayed on the display unit 3-6 based on control of the control unit 3-1 (see FIG. 7) (step S126).

Next, the electronic tag 6 is returned from the electronic tag purchasing business operator P2 to the electronic tag information management business operator P3 (step S127), and the returned electronic tag 6 is received by the electronic tag information management business operator P3 (step S128). At the electronic tag information management business operator P3, the electronic tag 6 is read by the electronic tag reader and writer 7c (step S129), and the identifier of the electronic tag 6, the name of the buying side emission allowance account management business operator P5, and the account number to which transfer is desired to be made are transmitted from the electronic tag reader and writer 7c to the terminal device 4 (step S130).

The identifier of the electronic tag 6, the name of the buying side emission allowance account management business operator P5, and the account number are transmitted from the terminal device 4 to the DB server 9 (step S131), and written in the DB 600 based on control of the control unit 9-1 of the DB server 9 (step S132).

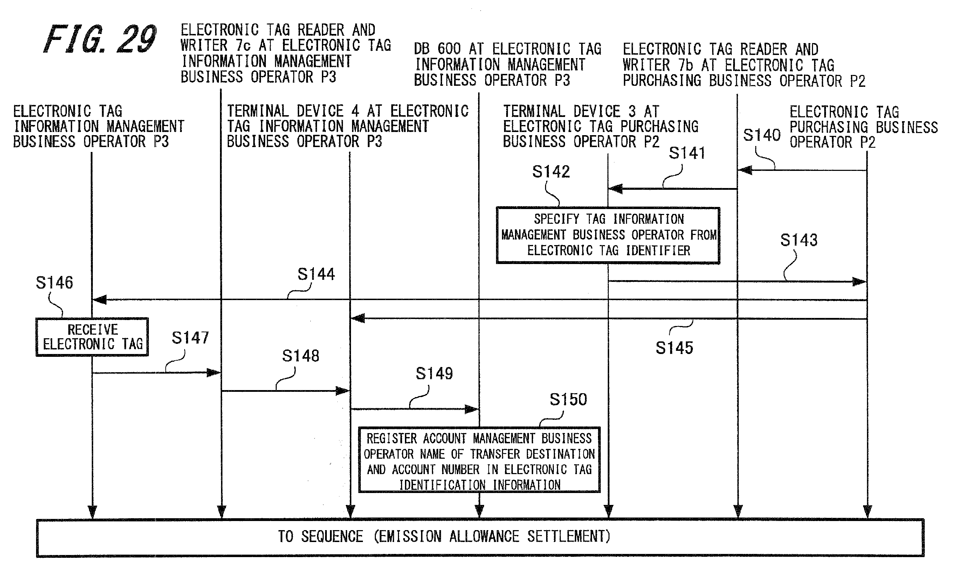

In the embodiment described so far, although the configuration and process has been described for the case using the electronic tag 6 which is also writable, the electronic tag 6 comprising a read-only tag may be used. FIG. 29 illustrates an exemplary process in the electronic tag returning phase for this case.

First, the electronic tag purchasing business operator P2 causes the electronic tag reader and writer 7b to read the electronic tag 6 to be settled (step S140), and the identifier of the electronic tag 6 is transmitted from the electronic tag reader and writer 7b to the terminal device 3 (step S141). Subsequently, if the electronic tag information management business operator P3 is specified by the terminal device 3 of the electronic tag purchasing business operator P2 based on the above information described in the identifier (step S142), the name of the electronic tag information management business operator P3 is displayed on the display unit 3-6 (see FIG. 7) as the name of the business operator to which the electronic tag 6 is returned (step S143).

Next, the electronic tag 6 is returned from the electronic tag purchasing business operator P2 to the electronic tag information management business operator P3 (step S144), and at the same time the account number desired to be specified as the transfer destination, and the name of the buying side emission allowance account management business operator P5 managing the account are transmitted from the electronic tag purchasing business operator P2 to the electronic tag information management business operator P3 (step S145).

Upon reception of the returned electronic tag 6 by the electronic tag information management business operator P3 (step S146), the electronic tag 6 is read by the electronic tag reader and writer 7c (step S147). Subsequently, the identifier of the electronic tag 6 is transmitted from the electronic tag reader and writer 7c to the terminal device 4 (step S148), and the identifier, the name of the buying side emission allowance account management business operator P5, and the account number desired to be specified as the transfer destination are transmitted from the terminal device 4 to the DB 600 at the electronic tag information management business operator P3 (step S149). These pieces of transmitted information are registered (step S150) in the DB 600 based on control of the control unit 9-1 (see FIG. 8) of the DB server 9.

Although, it is assumed in the sequence diagram of FIG. 29, that the electronic tag 6 is first returned from the electronic tag purchasing business operator P2 to the electronic tag information management business operator P3 (step S144) and subsequently the information required for transfer is transmitted (step S145), these processes may be performed in a reversed order. In other words, the electronic tag 6 may be returned after the information required for transfer has been tranmitted. In addition, the electronic tag reader and writer may be a device capable of only reading a barcode or the like.

### (5) Exemplary operation of the emission allowance settlement phase

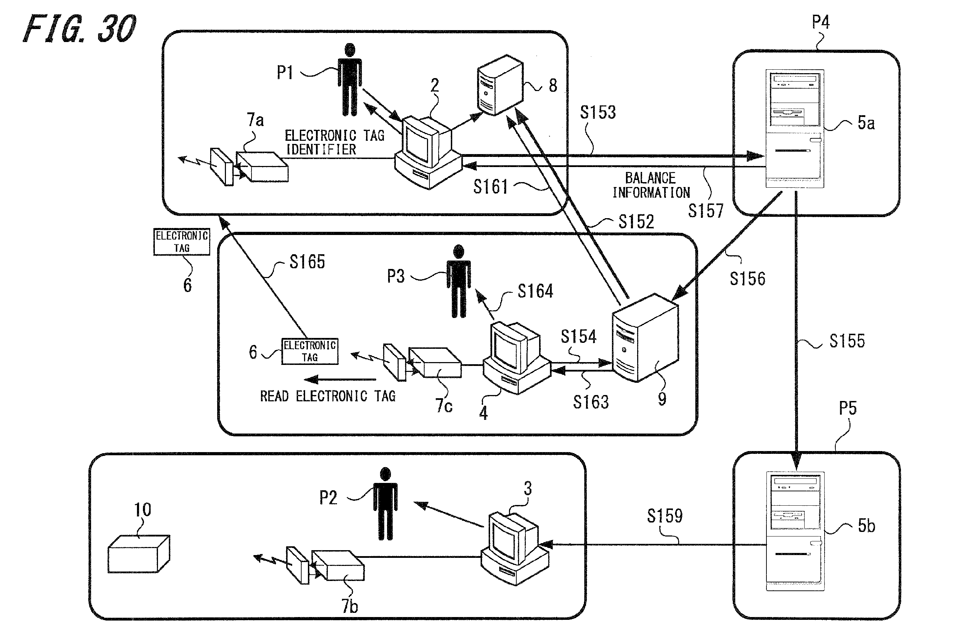

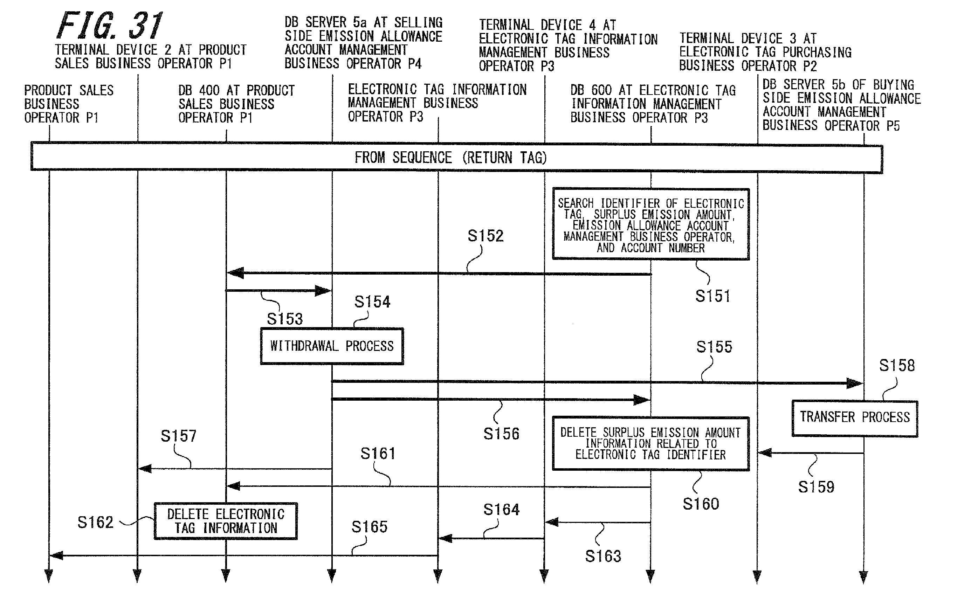

Next, an exemplary operation in the emission allowance settlement phase of the system according to the present embodiment will be described, referring to FIGS. 30 and 31. FIG. 30 is a system configuration diagram illustrating a configuration of the system accordin to the embodiment of the present invention in terms of the emission allowance settlement phase. The configuration of the system corresponds to that of FIG. 4 with a process flow being added. FIG. 31 is a sequence diagram illustrating the processes between respective devices in the emission allowance settlement phase. In FIGS. 30 and 31, identical reference numerals are provided to indicate the procedure of the processes. Additionally, in FIGS. 30 and 31, the thick lines indicate that an authenticated communication is performed therein

The emission allowance settlement phase refers to a phase of performing a delegated settlement process by the electronic tag information management business operator P3, transferring the fee for emission allowance to the account of the product sales business operator P1, and returning the settled electronic tag 6 to the product sales business operator P1. As shown in FIG. 30, transfer of the surplus emission amount is performed in the emission allowance settlement phase by performing communication among the electronic tag information management business operator P3, the product sales business operator P1, and the selling side emission allowance account management business operator P4.

In the sequence diagram shown in FIG. 31, the surplus emission amount, and information such as the selling side emission allowance account management business operator P4, the account number of the product sales business operator P1, the buying side emission allowance account management business operator P5, and the account number of the electronic tag purchasing business operator P2 are first searched in the DB 600 at the electronic tag information management business operator P3 with the identifier recorded on the electronic tag 6 received in the electronic tag returning phase serving as the key (step S151). Subsequently, these pieces of information acquired as a result of the search are transmitted to the DB 400 at the product sales business operator P1 via authenticated communication (step S152).

In the DB 400 at the product sales business operator P1, it is verified whether or not the transmitted information is reliable by cross-checking the information transmitted at step S152 and the information registered in the DB 400. When the information is verified, it is transmitted to the selling side emission allowance account DB server 5a via authenticated communication (step S153).

The withdrawal process is performed in the emission allowance account DB server 5a of the selling side emission allowance account management business operator P4 based on the above information received at step S153 (step S154). Subsequently, a transfer notification having weight information of the emission allowance described therein is transmitted from the emission allowance account DB server 5a at the selling side emission allowance account management business operator P4 to the emission allowance account DB server 5b of the buying side emission allowance account management business operator P5 via authenticated communication (step 5155). In addition, a notification of transfer completion is transmitted to the DB 600 at the electronic tag information management business operator P3 via authenticated communication (step S156). Furthermore, balance information of the emission allowance is transmitted to the terminal device 2 at the product sales business operator P1 (step S157).

In the emission allowance account DB server 5b of the buying side emission allowance account management business operator P5 which received the transfer notification transmitted at step S155, the transfer process is performed (step S158), and information of the balance of the emission allowance is transmitted to the terminal device 3 of the electronic tag purchasing business operator P2 (step S159).

At the electronic tag information management business operator P3 who received the notification of transfer completion transmitted at step S156, the information related to the identifier of the already transferred emission allowance is deleted from the DB 600, based on the received information (step S160). Completion of the deletion of the electronic tag information is then notified to the terminal device 2 at the product sales business operator P1 from the electronic tag information management business operator P3 (step S161).

In the DB 400 at the product sales business operator P1 which received the notification of deletion completion transmitted at step S161, the information related to the identifier of the already transferred emission allowance allowance is deleted from the DB 400 (step S162).

At the electronic tag information management business operator P3, after the surplus emission amount information is deleted from the DB 600 at step S160, a notification of deletion completion of the electronic tag information is transmitted to the terminal device 4 (step S163). In the terminal device 4 which received the notification of deletion of the electronic tag information, a process of displaying the information on the screen of the display unit 4-6 is performed (step S164), and the electronic tag information management business operator P3 who has confirmed the displayed content returns the electronic tag 6 to the product sales business operator P1 (step S165).

The balance notification process in the terminal device 2 at the product sales business operator P1 shown in step S157 and the balance notification process in the terminal device 3 of the electronic tag purchasing business operator P2 shown in step S159 are performed so that, should any dishonesty be attempted by the electronic tag information management business operator P3, the product sales business operator P1 and the electronic tag purchasing business operator P2 can detect it. Therefore, these processes may be omitted if it is apparent that the electronic tag information management business operator P3 is reliable, such that the electronic tag information management business operator P3 declared not to attempt any dishonesty by a written oath or the like at the start of the trade.

### <Exemplary process at the electronic tag information management business operator P3>

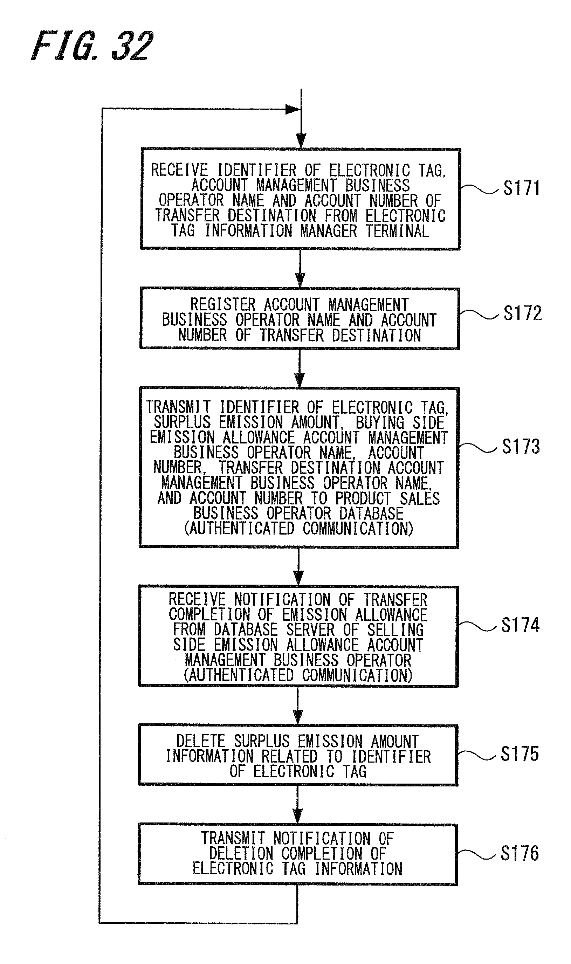

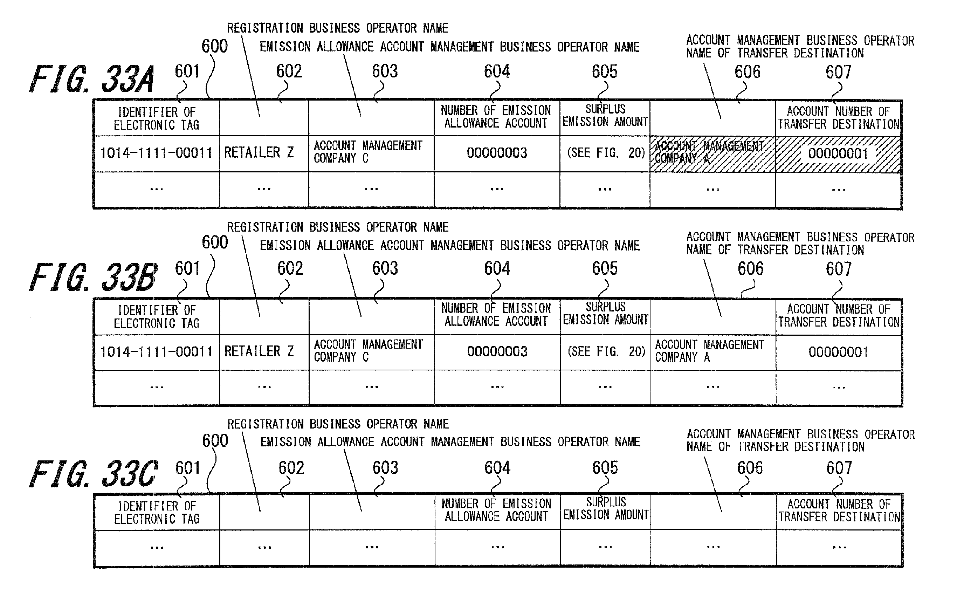

Next, an exemplary process in the DB server 9 of the electronic tag information management business operator P3 (see FIG. 4 or 8) in the emission allowance settlement phase will be described, referring to FIGS. 32 and 33. The flowchart shown in FIG. 32 extracts only the process in the DB server 9 of the electronic tag information management business operator P3 shown in the sequence diagram of FIG. 31.

The DB server 9 first receives the identifier of the electronic tag 6, the name of the buying side emission allowance account management business operator P5 managing the account of the transfer destination, and the account number of the transfer destination which have been transmitted from the terminal device 4 of the electronic tag information management business operator P3 (step S171). Then, a process is performed in the DB server 9 to write the name and the account number of the transfer destination of the buying side emission allowance account management business operator P5 into the DB 600 (step S172).

For example, when information such as "account management company A" has been tranmitted as the name of the buying side emission allowance account management business operator P5 and "00000001" has been input as the account number of the electronic tag purchasing business operator P2 to serve as the transfer destination, these pieces of information are registered in a place indicated by slanted lines in the DB 600 shown in FIG. 33A. FIG. 33A illustrates a state in which "account management company A" is registered in "account management business operator name of transfer destination 606" and "00000001" is registered in "account number of transfer destination 607" .

Referring to the flowchart of FIG. 32 again, the surplus emission amount, the name of the selling side emission allowance account management business operator P4, the account number of the product sales business operator P1, the name of the buying side emission allowance account management business operator P5, and the account number of the electronic tag purchasing business operator P2 are transmitted at step S173 to the DB 400 of the product sales business operator P1 via authenticated communication (step S173).

Next, upon reception of the notification of transfer completion of the emission allowance from the DB server 5a of the selling side emission allowance account management business operator P4 (step S174), information of the surplus emission amount relating to the identifier of the electronic tag 6 is deleted from the DB 600 of the electronic tag information management business operator P3 (step S175). A notification of deletion completion of the surplus emission amount is then transmitted to the DB 400 of the product sales business operator P1 (step S176).

Examples of the data of the DB 600 before and after the surplus emission amount is deleted are shown in FIGS. 33B and 33C. FIG. 33B indicates the state before deletion and FIG. 33C indicates the state after deletion. Here, a situation is assumed that the transfer completion notification of the surplus emission amount having an identifier "1014-1111 -00011" has been received when the DB 600 is in the state shown in FIG. 33B. Therefore, all the information that has been registered in association with the identifier "1014-1111 -00011" is deleted from the DB 600 shown in FIG. 33C.

Although a case of deleting all the information of the surplus emission amount related to the identifier is exemplified here, the information may be disabled instead of being deleted. For example, a field for storing a flag indicating disablement may be provided in the DB 600, and a process of turning the flag on may be performed at step S175 of FIG. 32. In this manner, a history of the traded surplus emission amount can be preserved as data.

### <Exemplary process at the emission allowance account management business operator>

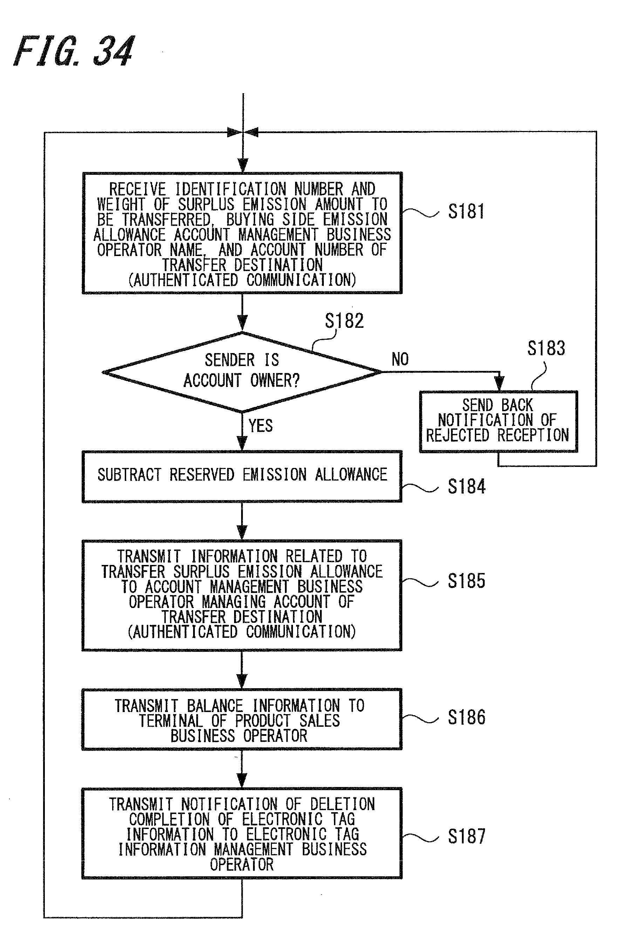

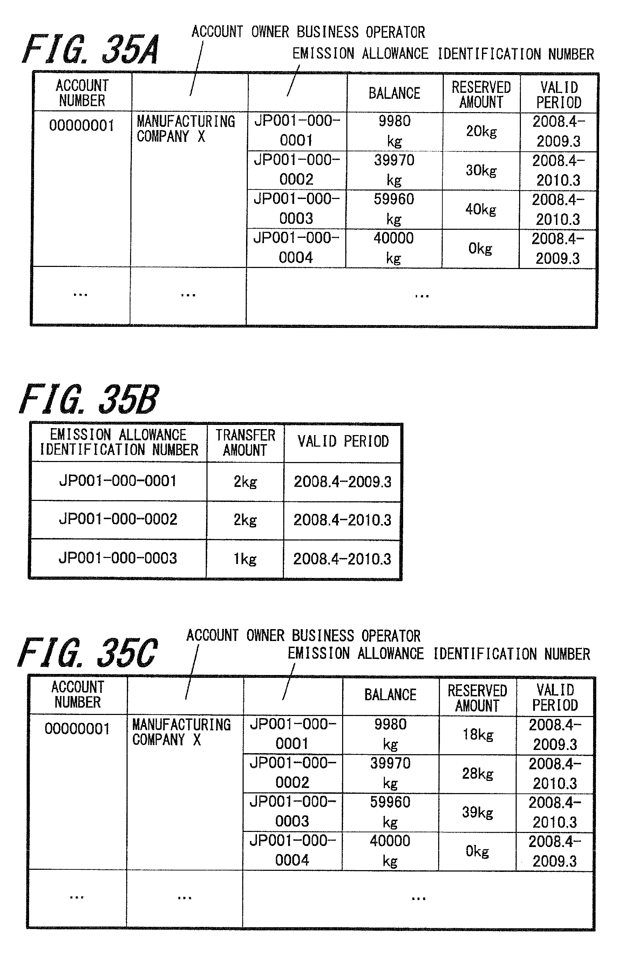

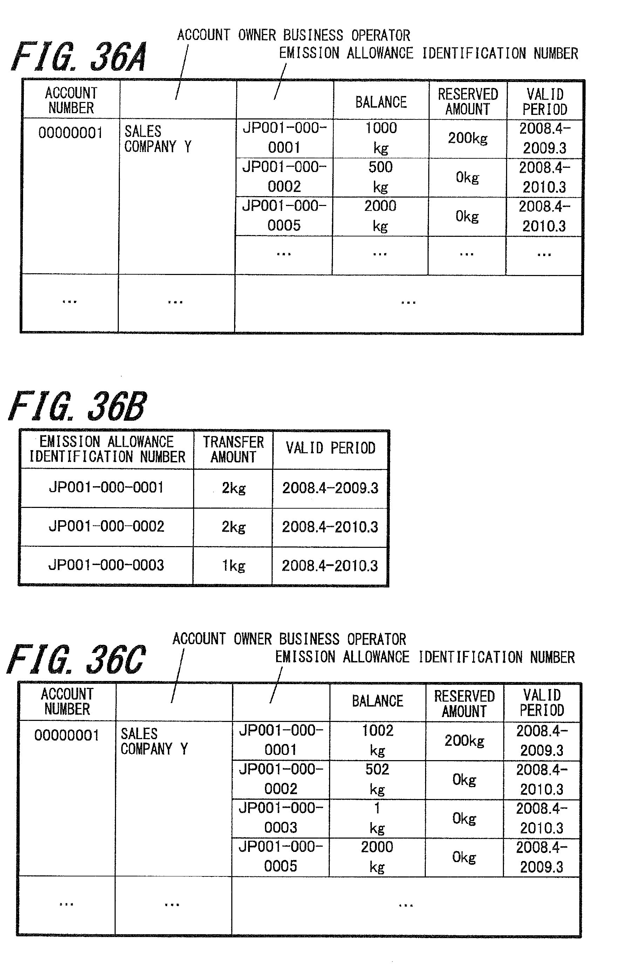

Next, an exemplary process at the emission allowance account management business operator in the emission allowance settlement phase will be described, referring to the flowchart of FIG. 34 and the explanatory diagrams of FIGS. 35A to 35C and 36A to 36C.

As shown in FIG. 34, the identification number and the weight r of the surplus emission amount to be transferred, the name of the buying side emission allowance account management business operator P5, and the account number of the transfer destination which have been transmitted from the product sales business operator P1 via authenticated communication are first received by the selling side emission allowance account management business operator P4 (step S181). Subsequently, it is determined whether or not the sender is the account owner (step S182) and, if it is not the account owner, a notification of rejected reception is sent back to the sender (step S183), and the process is canceled.

If the sender is the account owner, the weight r of the surplus emission amount to be transferred is then subtracted from the reserve Aₛ (see FIG. 5B) of the emission allowance in the DB 500 of the DB server 5a of the selling side emission allowance manegment business operator P4 (step S184). A process of transmitting the information related to the transferred surplus emission amount to the buying side emission allowance account management business operator P5 having the account of the transfer destination via authenticated communication is performed (step S185). Subsequently, a process of transmitting the balance information of the surplus emission amount in the DB 500 to the terminal device 2 of the product sales business operator P1 is performed (step S186), and a notification of deletion completion of information written in the electronic tag 6 is transmitted to the electronic tag information management business operator P3 (step S187).

FIGS. 35A to 35C illustrate an exemplary change in the data of the DB 500 of the DB server 5a of the selling side emission allowance account management business operator P4 when the subtraction process (withdrawal process) of the reserve is performed. Here, a case is assumed where the surplus emission amount is transferred from the manufacturing company X which is the product sales business operator P1 to the sales company Y which is the electronic tag purchasing business operator P2.

FIG. 35A illustrates an example of the DB 500 before the withdrawal process, and information of the surplus emission amount for the emission allowance identification numbers "JP001-000-0001" to "JP001-000-0004" is described. For example, the balance is 9980 kg, the reserve is 20 kg, and the valid period is from April 2008 to March 2009, for the surplus emission amount of the emission allowance identification number "JP001-000-0001".

FIG. 35B illustrates the information transmitted from the product sales business operator P1 as a withdrawal request of the surplus emission amount. The request shown in FIG. 35B instructs to withdraw 2 kg from the surplus emission amount for the emission allowance identification number "JP001-000-0001", 2 kg from the surplus emission amount for "JP001-000-0002", and 1 kg from the surplus emission amount for "JP001-000-0003".

An example of the DB 500 after actually performing withdrawal based on the above information is shown in FIG. 35C. In FIG. 35C, it is shown that the requested withdrawal amount 2 kg has been subtracted from the reserved amount 20 kg of the surplus emission amount of "JP001-000-0001" shown in FIG. 35A, resulting in 18 kg. Similarly, 30 kg - 2 kg = 28 kg for "JP001-000-0002", and 40 kg- 1 kg = 39 kg for "JP001-000-0003" have been realized. In other words, the "weight" described in the withdrawal request is subtracted from the reserved amount for the identification number identical to the emission allowance identification number described in the withdrawal request.

FIGS. 36A to 36C illustrate an exemplary change in the data of the DB 500 when performing the transfer process, at the buying side emission allowance account management business operator P5. Here, a case in which a notification of transfer of surplus emission amount is transmitted from the selling side emission allowance account management business operator P4 who has performed the withdrawal process as shown in FIGS. 35A and 35C.

FIG. 36A illustrates an example of the DB 500 before the transfer process, in which the information of the surplus emission amount having the emission allowance identification numbers "JP001-000-0001", "JP001-000-0002", and "JP001-000-0005" is described. For example, the balance is 1000 kg, the reserve is 200 kg, and the valid period is from April 2008 to March 2009, for the surplus emission amount of the emission allowance identification number "JP001-000-0001".

FIG. 36B illustrates the information described in the notification of transfer of the surplus emission amount transmitted from the product sales business operator P1. It is indicated that an instruction is provided to transfer 2 kg for the surplus emission amount of the emission allowance identification number "JP001-000-0001", 2 kg for the surplus emission amount of "JP001-000-0002", and 1 kg for the surplus emission amount of "JP001-000-0003".

FIG. 36C illustrates an example of the DB 500 after actually performing the transfer process, based on the above information. In FIG. 36C, it is indicated that 2 kg of the transfer request has been added to the balance 1000 kg of the surplus emission amount of "JP001-000-0001" shown to FIG. 36A, resulting in 1002 kg. Similarly, a result of 500 kg + 2 kg = 502 kg is shown for "JP001-000-0002". Since the information of the surplus emission amount related to the identification number "JP001-000-0003" is not recorded in the DB 500 before the transfer process shown in FIG. 36A, a new line is added in which the information of the surplus emission amount of the identification number "JP001-000-0003" is added. In other words, the "weight" described in the transfer request is added to the balance of the identification number which is identical to the emission allowance identification number described in the transfer request of the surplus emission amount.

### [7. Effects by the present embodiment]

According to the embodiment described above, trading of an emission allowance can be realized by selling the electronic tag 6 being attached to the product 10 and returning the electronic tag 6 to the product sales business operator P1 who is the owner of the emission allowance. In other words, trading of an emission allowance can be performed easily and reliably through transfer of a physical substance such as the electronic tag 6.

In addition, according to the embodiment described above, the electronic tag purchasing business operator P2 can make a settlement of the emission allowance by simply returning the electronic tag 6. In other words, it becomes possible to buy an emission allowance easily without having to explicitly buy a trust beneficiary right from a trust bank.

Additionally, according to the embodiment described above, installing the electronic tag reader and writer 7b and the terminal device 3 of the electronic tag purchasing business operator P2 in front of a shop or the like, together with a box or the like for returning the electronic tag 6, allows a consumer who does not have such devices to buy the product 10 with the electronic tag 6 (surplus emission amount) and also exchange it with cash. Accordingly, increase of trade of emission allowances in the market can be expected.

Additionally, according to the embodiment described above, since the electronic tag 6 is returned to the owner of the electronic tag 6 when making a settlement of the surplus emission amount, the electronic tag 6 itself becomes recyclable. Accordingly, the distribution unit price of the electronic tag 6 is expected to fall.

Additionally, according to the embodiment described above, the electronic tag purchasing business operator P2 can buy the surplus emission amount not only for personal use but also for transfer. In other words, it becomes possible for the buyer of the surplus emission amount to use the emission allowance as a right not only through its own carbon offset but also through transfer.

For example, let us consider a case in which a household appliance manufacturer is the product sales business operator P1 who sells the comoodity 10 with the electronic tag 6 associated with a surplus emission amount being attached thereto to a household appliance mass retailer who is a distributor. Since associating a surplus emission amount with the product 10 turns out to be a sales promotion of the product 10, it is conceivable that the household appliance mass retailer asks the household appliance manufacturer to share a part of the burden of the surplus emission amount. In such a case, the household appliance manufacturer may be obliged to bear, in addition to the burden of the surplus emission amount provided by itself, the burden requested from the household appliance mass retailer, resulting in a double burden. Such a mechanism is considered to hinder expansion of sales of the surplus emission amount in a form being attached to the product 10.

On the other hand, in the system according to the embodiment described above, the household appliance mass retailer that bought the product 10 with the surplus emission amount from the household appliance manufacturer can also make a settlement of the surplus emission amount by itself. In other words, the household appliance mass retailer can provide the product with a new added-value, based on the acquired right (surplus emission amount). Accordingly, there will be more manufacturers and wholesale suppliers selling the product 10 with the surplus emission amount because the problem of double burden on the household appliance manufacturer is solved. Of course, the household appliance mass retailer may choose the form of selling the product 10 still having attached thereto the electronic tag 6 on which the surplus emission amount information is described. In other words, transfer of the emission allowance can be realized in a form along with the process of manufacturing or distribution of products, according to the system of the present embodiment.

In addition, according to the embodiment described above, it becomes possible to expand sale of the product 10 with the surplus emission amount not only for consumers, i.e., downstream of manufacturing and distribution, but also in the entire process from upstream to downstream, as shown in FIG. 3. Accordingly, a larger reduction of greenhouse gas is expected to result from trading emission allowances.

in addition, according to the embodiment described above, a variety of information related to the surplus emission amount can be checked by reading the electronic tag 6 and referring to the database. For example, the type, source, and unique number of the emission allowance can be examined. Accordingly, even if the emission allowance is sold after having been divided into parts and packaged by the owner of the right of emission allowance, information related to each emission allowance can be precisely acquired. Here, the emission allowance is not the result of prior reduction by an emission reduction project or the like, but is an emission allowance expected to be reduced in the future. Accordingly, there is a possibility that, if an emission reduction project is called off for some reason, the emission allowance thereof may become invalid. According to the present embodiment, even if a particular surplus emission amount has become invalid among already bought surplus emission amount, influence on other emission allowances can be prevented. Furthermore, the surplus emission amount as an asset value can be precisely estimated.

In addition, according to the embodiment described above, values of the balance and the reserve of an emission allwance are changed in the DB 500 of the emission allowance account management business operator P4 (or P5), when making a settlement of the emission allowance. In other words, the procedure of the emission allowance settlement will be explicitly presented. Accordingly, dishonest acts can be prevented.

In addition, according to the embodiment described above, balance information of an emission allowance will be notified to the terminal device 2 at the product sales business operator P1 and the terminal device 3 of the electronic tag purchasing business operator P2 when the electronic tag information management business operator P3 makes a settlement of the emission allowance. Accordingly, should any dishonest act (forgery of a false emission allowance) be performed by the electronic tag information management business operator P3, it can be immediately detected and eliminated. This is also expected to suppress dishonest acts.

Additionally, in the embodiment described above, information about the buyer of the electronic tag 6 is not written into the electronic tag 6. Accordingly, there is no risk of leakage of the information about the buyer to somebody else at the stage of transfer or use of the emission allowance. In addition, the electronic tag purchasing business operator P2 can specify, as the transfer destination, an account number which is different from the account that directly belongs to himself, whereby the problem of privacy infringement can be avoided.

### [8. Exemplary variation (1) of the embodiment]

Although it is assumed in the embodiment described above that the owner of the electronic tag 6 is the product sales business operator P1, the invention may be applied to a case in which the electronic tag information management business operator P3 is the owner of the electronic tag 6. In this case, the difference lies in the following configuration and process.
a. Data structure of the electronic tag 6
b. Method of specifying the electronic tag information management business operator P3 from the electronic tag 6
c. Configuration of the DB 600 at the electronic tag information management business operator P3
d. Process at the electronic tag information management business operator P3 in the sales phase

### a. Data structure of the electronic tag 6

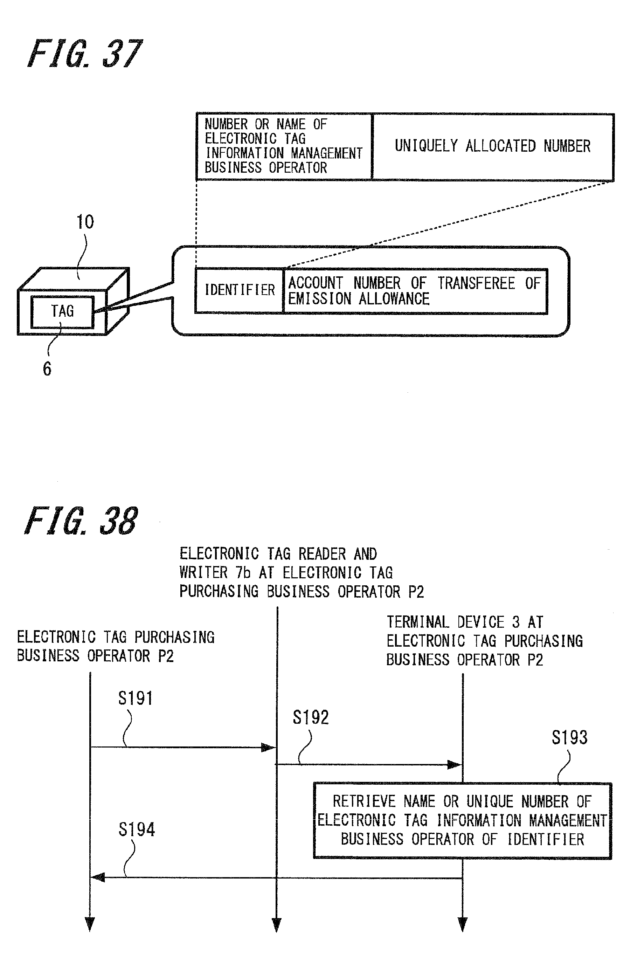

First, an exemplary data structure of the electronic tag 6 will be described, referring to FIG. 37. If the owner of the electronic tag 6 is the electronic tag information management business operator P3, a number (or name) indicating the electronic tag information management business operator P3 is described in the identifier of the electronic tag 6 attached to the product 10. Accordingly, the electronic tag purchasing business operator P2 is allowed to acquire information of the electronic tag information management business operator P3 by reading the electronic tag 6 in the reference phase of the emission allowance, or in the return phase of the electronic tag 6.

### b. Method of specifying the electronic tag information management business operator P3 from the electronic tag 6

FIG. 38 illustrates a process flow when specifying the electronic tag information management business operator P3 from the information described in the electronic tag 6, by the electronic tag purchasing business operator P2. First, the electronic tag purchasing business operator P2 performs an operation to cause the electronic tag reader and writer 7b to read the electronic tag 6 (step S191), and information of the read identifier of the electronic tag 6 is transmitted to the terminal device 3 from the electronic tag reader and writer 7b (step S192).

Subsequently, in the terminal device 3, information of the electronic tag information management business operator P3 described in the identifier is retrieved (step S193), and the retrieved information of the electronic tag information management business operator P3 is notified to the electronic tag purchasing business operator P2 through the display unit 3-6 (see FIG. 7) (step S194).

### c. Configuration of the DB 600 at the electronic tag information management business operator P3

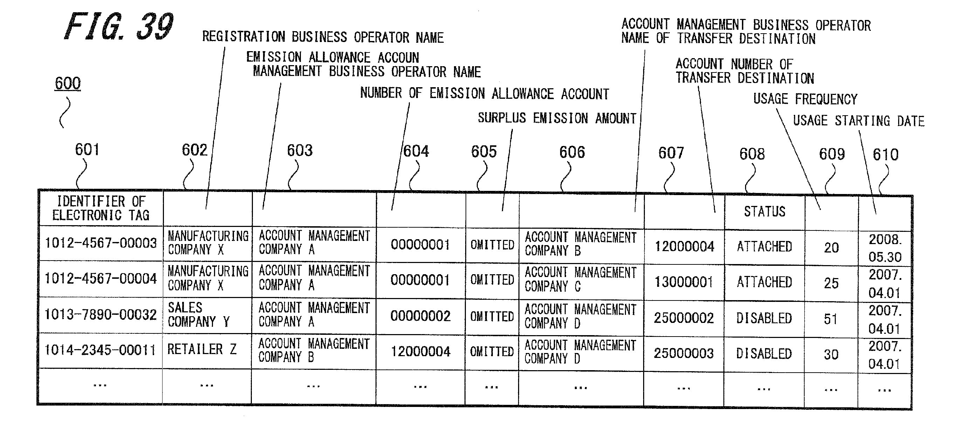

In addition, when the electronic tag information management business operator P3 is also the owner of the electronic tag 6, it becomes necessary to manage the information related to the usage status of the electronic tag 6 in the DB 600 of the electronic tag information management business operator 3. FIG. 39 illustrates an exemplary configuration of the DB 600 when the electronic tag information management business operator P3 is also the owner of the electronic tag 6. In FIG. 39, identical reference numerals are provided to elements corresponding to those of FIG. 13 and detailed description thereof is omitted.

In the DB 600 shown in FIG. 39, information such as a status 608, a usage frequency 609, and a usage starting date 610 are managed, other than the items shown in FIG. 13. These items correepons to those managed in the DB 400 at the product sales business operator P1 when the owner of the electronic tag 6 is the product sales business operator P1, and are identical to the status 402, the usage frequency 403, and the usage starting date 404 of FIG. 11. By configuring the DB 600 at the electronic tag information management business operator P3 in this manner, the electronic tag information management business operator P3 can precisely grasp the usage status of the electronic tag 6.

### d. Process at the electronic tag information management business operator P3 in the sales phase

If the owner of the electronic tag 6 is the electronic tag information management business operator P3, it becomes necessary to rewrite the data of the DB 600 shown in FIG. 39 when the electronic tag 6 is attached to the product 10, or when the surplus emission amount is allocated to the electronic tag 6. Specifically, it is necessary to increment the usage frequency 609 by one in the line storing the identifier of the electronic tag 6, and change the value of the status 608 to "attached". If the electronic tag 6 attached to the product 10 is the electronic tag 6 used for the first time, a process of entering information of the current date and time into the usage starting date also becomes necessary.

### [9. Exemplary variation (2) of the embodiment]

In addition, although the electronic tag 6 is removed from the product 10 and returned to the electronic tag information management business operator P3 when making a settlement of the emission allowance in the embodiment described above, the electronic tag 6 may be returned in a state attached to the product 10.

For example, when the product sales business operator P1 recycles (reuses) the product 10 itself or a part of the product 10 such as a beer bottle, the returned electronic tag 6 may be accepted in a state attached to the product 10 or to a part of the product 10.

The electronic tag information management business operator P3 who received the returned product 10 or a part of the product 10 has only to perform the process of transferring the surplus emission amount allocated to the electronic tag 6 from the account of the selling side emission allowance account management business operator P4 to the account of the buying side emission allowance account management business operator P5, as with the case in which only the electronic tag 6 is received.

Accordingly, a larger amount of the product 10 or a part of the product 10 as a resource will be returned from the consumer who is the electronic tag purchasing business operator P2. In other words, reuse or recycling will be promoted.

Although a tangible object is assumed as the product to which an emission allowance is attached in the embodiment described above, the invention is not limited thereto. It may be applied to a form of selling an emission allowance being attached to an intangible product.

In addition, although the electronic tag 6 is exemplified as a form of a non-contact IC medium for the surplus emission amount in the embodiment described above, a barcode, for example, is conceivable as the non-contact IC medium other than the electronic tag, as described above. Therefore, the embodiment described above may be applied to use of a barcode instead of a non-contact IC medium. In that case, however, a barcode scanner is supposed to be used instead of an electronic tag reader and writer. In addition, it is desirable to use forgery-preventing technology such as holography together to prevent reproduction of the barcode.

Although the embodiment of the present invention has been described above, it is needless to say that the present invention is not limited to the embodiment described above and includes various types of variations and applications within the scope of the present invention defined in the range of the appended claims.

### [Reference numerals]

1...network, 2...terminal device, 2-1...control unit, 2-2...communication processing unit, 2-3...storage unit, 2-4...electronic tag reader and writer I/F unit, 2-5...operation unit, 2-6...display unit, 3...terminal device, 3-1...control unit, 3-6...display unit, 4...terminal device, 4-6...display unit, 5-1... control unit, 5-2...storage unit, 5-2...communication processing unit, 5-3...storage unit, 5a, 5b...emission allowance account DB server, 6... electronic tag, 6-1...control unit, 6-2...transceiver unit, 6-3...storage unit, 7a...electronic tag reader and writer, 7a-1...control unit, 7a-2...transceiver unit, 7a-4...communication unit, 7b, 7c...electronic tag reader and writer, 8...database (DB) server, 8-1...control unit, 8-2...communication processing unit, 8-3...storage unit, 9...DB server, 9-1...control unit, 10...product, 401...identifier, 402...status, 403...usage frequency, 404...usage starting date, 405...product information, 406...electronic tag information management business operator name, 501...account number, 502...account owner business operator name, 503...emission allowance identification number, 504...balance, 505...reserved amount, 506...valid period, 601...identifier, 602...registration business operator name, 603... account management business operator name, 604...number of emission allowance account, 605...surplus emission amount, 606...account management business operator name, 607...account number, 608...status, 609...usage frequency, 610...usage starting date, Al...reserved amount, Ab...reserve, As...reserve, D1...database, F1,F2...engine plant, F3, F4...glass plant, F5,F6...tire plant, F7...automobile assembly plant, P1...product sales business operator, P2...electronic tag purchasing business operator, P2' ... tag buyer, P3...electronic tag information management business operator, P4...selling side emission allowance account management business operator, P5...buying side emission allowance account management business operator, r, r₁, r_{M}... weight, W₁, W_{b}, W_{M}, W_{S} ... balance

## Claims

1. An emission allowance trading system that trades an emission allowance of a greenhouse gas, the system comprising:
a terminal device of a seller who sells a product and/or an emission allowance;
a terminal device of a buyer who buys the product and/or the emission allowance;
settlement servers that perform a settlement process of the emission allowance; and
a management server that requests the settlement server to perform the settlement process, which are connected to each other via a network,
the management server including:
a first reading and writing device which reads and writes data from and to a non-contact IC medium;
a first database which manages weight information of the emission allowance and identification information of the non-contact IC medium in association with each other;
a first communication processing unit which transmits and receives data via the network; and
a first control unit which controls the first database and the first communication processing unit, and
the settlement servers each including:
a second database which manages weight information of an emission allowance of the seller, account information of a dealing account of the emission allowance of the seller, weight information of an emission allowance on the buyer, and account information of the dealing account of the emission allowance of the buyer; and
a second control unit which controls the second database and also controls a withdrawal process from the account of the seller and a transfer process to the account of the buyer, wherein
the first control unit of the management server performs, when the non-contact IC medium removed from a product bought from the seller is sent from the buyer, a control of causing the first reading and writing device to read identification information of the non-contact IC medium, subtracting the weight of the emission allowance in the first database associated with the identification information of the non-contact IC medium read by the first reading and writing device, and transmitting subtracted weight information which is the information of the subtracted weight and the identification information of the non-contact IC medium to the settlement server as a request of executing the settlement process, and wherein
the second control unit of the settlement server performs, when the request of executing the settlement process is received from the management server, a control of subtracting weight corresponding to the amount described in the subtracted weight information transmitted from the management server from the weight of the emission allowance of the seller in the second database associated with the identification information included in the execution request, adding the subtracted weight to the weight of the emission allowance of the buyer in the second database, and further, withdrawing an amount of the subtracted weight from the account of the seller and transferring the withdrawn amount to the account of the buyer.

2. The emission allowance trading system according to claim 1, wherein
the terminal device of the buyer includes:
a second reading and writing device which reads and writes data from and to the non-contact IC medium;
a second communication processing unit which transmits and receives data via the network; and
a third control unit which controls the second reading and writing device and the second communication processing unit, wherein
the first database of the management server has registered therein a name of the seller of the emission allowance, weight information of one or more emission allowances managed by emission allowance identification information which is the information for identifying the emission allowance, and information of a valid period of the emission allowance managed by each of the emission allowance identification information, and wherein
each of the information registered in the first database can be referred to from the terminal device of the buyer by the identification information of the non-contact IC medium which has been preliminarily read by the second reading and writing device before sending the non-contact IC medium to the management server.

3. The emission allowance trading system according to claim 1 or 2, wherein the terminal device of the seller is connected to a third database which manages information related to the non-contact IC medium, and the third database has recorded therein identification information of the non-contact IC medium, and each information of a usage status of the non-contact IC medium, a usage frequency of the non-contact IC medium, and a usage starting date of the non-contact IC medium.

4. The emission allowance trading system according to claim 3, wherein information of a remaining amount of the emission allowance after the settlement process is notified to the terminal device of the seller and the terminal device of the buyer after the settlement process in the settlement server has been completed.

5. The emission allowance trading system according to any one of claims 1 to 4, wherein the non-contact IC medium has described thereon an account number of a transferee of the emission allowance.

6. The emission allowance trading system according to any one of claims 1 to 4, wherein the non-contact IC medium has only the identification information described thereon and has not the account number of the transferee of the emission allowance described thereon.

7. The emission allowance trading system according to any one of claims 1 to 6, wherein the first control unit of the management server performs a control of transmitting a request of executing the settlement process to the settlement server when the non-contact IC medium is sent in a state attached to a product bought from the seller or a part of the product.

8. The emission allowance trading system according to any one of claims 1 to 7, wherein the non-contact IC medium is an electronic tag.

9. The emission allowance trading system according to any one of claims 1 to 7, wherein the non-contact IC medium is a barcode.

10. An emission allowance trading method of trading an emission allowance of greenhouse gas between a seller who sells a product and/or an emission allowance and a buyer who buys the product and/or the emission allowance, the method comprising, in a management server which requests execution of a settlement process to settlement servers which make a settlement of the emission allowance, steps of:
managing weight information of the emission allowance and identification information of a non-contact IC medium in association with each other;
storing, in a database provided at each of the settlement servers, weight information of an emission allowance of the seller, account information of a dealing account of the emission allowance of the seller, weight information of an emission allowance of the buyer, and account information of a dealing account of the emission allowance of the buyer; and
when the non-contact IC medium removed from a product bought from the seller is sent from the buyer, reading the identification information of the non-contact IC medium, subtracting the weight of the emission allowance in the database associated with the read identification information, and also transmitting the subtracted weight information which is the information of the subtracted weight and identification information of the non-contact IC medium to the settlement server as a request of executing the settlement process; and
the method comprising, in the settlement servers, a step of
controlling a withdrawal process from the account the seller and a transfer process to the account of the buyer in relation with the emission allowance traded between the seller and the buyer, based on the transmitted request of executing the settlement process and the information stored in the database.
